# EUROPEAN PATENT APPLICATION

(11) **EP 3 779 748 A1**
(43) Date of publication of application: **17.02.2021**
(21) Application number: 19781471.8
(22) Date of filing: 06.02.2019
(51) Int. Cl.: G06F 21/57, G06F 21/64, G06Q 20/06, G06Q 20/16, G06Q 20/38

(54) **INFORMATION PROCESSING DEVICE, INFORMATION PROCESSING METHOD, AND PROGRAM**

(30) Priority: 02.04.2018 JP 2018070787
(71) Applicant: Sony Corporation, 108-0075 Tokyo (JP)
(72) Inventor: TAKAHASHI, Koki, Tokyo 141-0031 (JP); WATANABE, Kazuhiro, Tokyo 141-0031 (JP); ISOZU, Masaaki, Tokyo 141-0031 (JP)
(74) Representative: 2SPL Patentanwälte PartG mbB
(86) International application number: PCT/JP2019/004218
(87) International publication number: WO 2019/193833

(57) **Abstract**

[Problem] It is possible to calculate reliability of a P2P database more appropriately.

[Solution] There is provided an information processing apparatus including a reliability calculating unit configured to calculate reliability of a P2P database on a basis of information regarding the P2P database.

## Description

### Field

The present disclosure relates to an information processing apparatus, an information processing method, and a program.

### Background

In recent years, service using a peer-to-peer database including blockchain data has been actively developed. Examples of the service can include, for example, Bitcoin, or the like, in which blockchain data is used to exchange virtual currency. With the peer-to-peer database including blockchain data, it is possible to prevent falsification, or the like, of registered data, and store registered data with high reliability by a mutual surveillance effect of nodes by a plurality of business operators.

Patent Literature 1 discloses a technology of performing mutual surveillance by respective node apparatuses grasping states (such as a life-and-death state) of other node apparatuses in a peer-to-peer database.

### Citation List

### Patent Literature

Patent Literature 1: JP 2006-209440 A

### Summary

### Technical Problem

Here, as described above, with the peer-to-peer database, while it is possible to prevent falsification, or the like, of registered data and store registered data with high reliability, there is a case where levels of reliability of respective peer-to-peer databases may be different from each other in accordance with types, or the like, of respective peer-to-peer database infrastructures. Further, reliability of the peer-to-peer database could not be calculated by the technology of the above-described Patent Literature 1, or the like.

Therefore, the present disclosure has been made in view of the above, and the present disclosure provides a new and improved information processing apparatus, information processing method and program capable of calculating reliability of a peer-to-peer database more appropriately.

### Solution to Problem

According to the present disclosure, an information processing apparatusis provided that includes: a reliability calculating unit configured to calculate reliability of a P2P database on a basis of information regarding the P2P database.

Moreover, according to the present disclosure, an information processing method to be executed by a computer is provided that includes: calculating reliability of a P2P database on a basis of information regarding the P2P database.

Moreover, according to the present disclosure, a program is provided that causes a computer to execute: calculating reliability of a P2P database on a basis of information regarding the P2P database.

### Advantageous Effects of Invention

According to the present disclosure as described above, it is possible to calculate reliability of a peer-to-peer database more appropriately.

Note that the above-described effect is not necessarily restrictive, and any one of effects described in the present specification or any another effect obtainable from the present specification may be exhibited in addition to or in place of the above-described effect.

### Brief Description of Drawings

FIG. 1 is a view explaining outline of blockchain data which is one type of a peer-to-peer database.
FIG. 2 is a view explaining outline of blockchain data which is one type of a peer-to-peer database.
FIG. 3 is a view explaining outline of blockchain data which is one type of a peer-to-peer database.
FIG. 4 is a view explaining a configuration example of an information processing system according to a first embodiment.
FIG. 5 is a block diagram illustrating a functional configuration example of a server apparatus 100 according to the first embodiment.
FIG. 6 is a block diagram illustrating a functional configuration example of a first node apparatus 200 according to the first embodiment.
FIG. 7 is a block diagram illustrating a functional configuration example of a storage apparatus 300 according to the first embodiment.
FIG. 8 is a block diagram illustrating a functional configuration example of a client apparatus 400 according to the first embodiment.
FIG. 9 is a sequence diagram illustrating an example of processing flow for calculating reliability of a P2P database 221.
FIG. 10 is a sequence diagram illustrating an example of processing flow in which reliability information of the P2P database 221 is provided to a user.
FIG. 11 is a view illustrating a UI example when registered data and the reliability information are provided to the user.
FIG. 12 is a view illustrating a UI example when registered data and the reliability information are provided to the user.
FIG. 13 is a view illustrating a UI example when registered data and the reliability information are provided to the user.
FIG. 14 is a block diagram illustrating a functional configuration example of a server apparatus 100 according to the second embodiment.
FIG. 15 is a sequence diagram illustrating an example of processing flow for providing recommendation level information to the user, and processing flow for registering registration target data, according to the second embodiment.
FIG. 16 is a view illustrating a UI example when the recommendation level information is provided to the user.
FIG. 17 is a view illustrating a UI example when the recommendation level information is provided to the user.
FIG. 18 is a view illustrating a UI example when the recommendation level information is provided to the user.
FIG. 19 is a view illustrating a UI example when the recommendation level information is provided to the user.
FIG. 20 is a block diagram illustrating a hardware configuration example of an information processing apparatus 900 which realizes the server apparatus 100, the first node apparatus 200, a second node apparatus 201, the storage apparatus 300 or the client apparatus 400 according to the first embodiment or the second embodiment.

### Description of Embodiments

Favorable embodiments of the present disclosure will be described in detail with reference to the appended drawings. Note that, in the present specification and drawings, redundant description of a configuration element having substantially the same functional configuration is omitted by providing the same sign.

Note that the description will be given in the following order.
1. Outline of peer-to-peer database
2. First embodiment
2.1. Outline
2.2. System configuration example
2.3. Functional configuration example of server apparatus 100
2.4. Functional configuration example of first node apparatus 200
2.5. Functional configuration example of storage apparatus 300
2.6. Functional configuration example of client apparatus 400
2.7. Processing flow
2.8. User interface example
3. Second embodiment
3.1. Functional configuration example of server apparatus 100
3.2. Processing flow
3.3. User interface example
4. Hardware configuration example
5. Conclusion

### <1. Outline of peer-to-peer database>

Before embodiments of the present disclosure is described, first, outline of a peer-to-peer database will be described.

In an information processing system according to the present embodiment, a distributed peer-to-peer database which is distributed in a peer-to-peer network is utilized. Note that there is also a case where the peer-to-peer network is referred to as a peer-to-peer distributed file system. In the following description, there is a case where the peer-to-peer network will be expressed as a "P2P network", and the peer-to-peer database will be expressed as a "P2P database". Examples of the P2P database can include blockchain data which is distributed in the P2P network. Therefore, first, outline of a blockchain system will be described as an example.

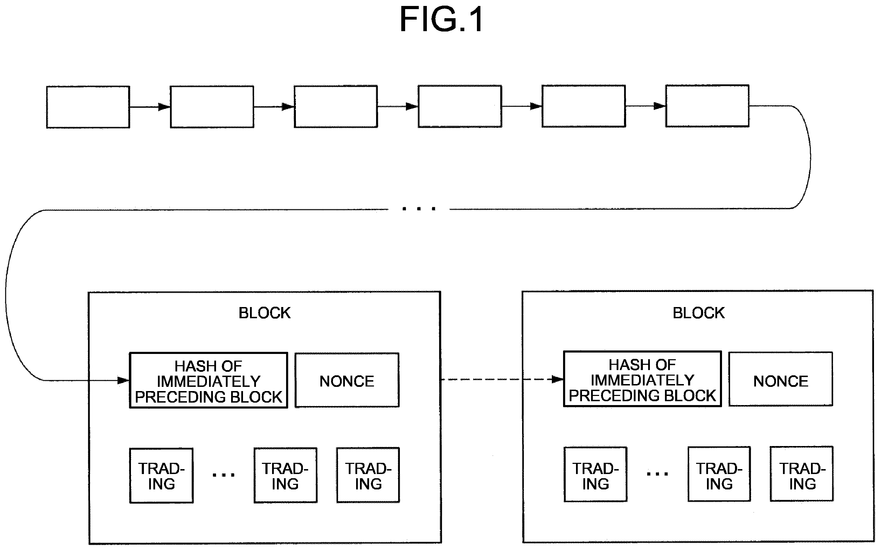

As illustrated in FIG. 1, the blockchain data is data in which a plurality of blocks is included like a chain. In each block, one or two or more pieces of target data can be stored as transaction (trading).

Examples of the blockchain data can include, for example, blockchain data to be used for exchanging data of virtual currency such as Bitcoin. The blockchain data to be used for exchanging data of virtual currency includes, for example, values called hash of an immediately preceding block, and a nonce. The hash of the immediately preceding block is information to be used for determining whether or not the block is a "correct block" correctly continuing from the immediately preceding block. The nonce is information to be used for preventing spoofing in authentication using the hash, and falsification is prevented by the use of the nonce. Examples of the nonce can include, for example, a character string, a number string, data indicating combination of these, or the like.

Further, in the blockchain data, spoofing is prevented by an electronic signature using an encryption key being provided to data of respective transactions. Further, the data of the respective transactions are made public and shared in the whole P2P network. Note that the data of the respective transactions may be encrypted using an encryption key.

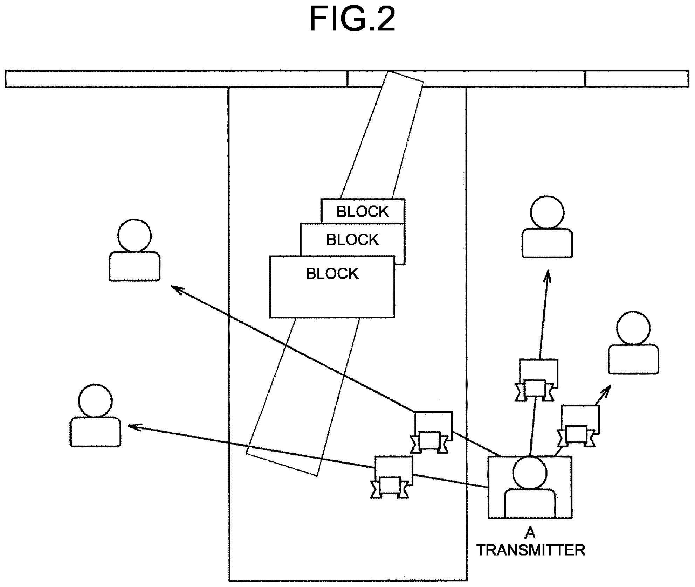

FIG. 2 is a view illustrating an aspect where target data is registered by a user A in the blockchain system. The user A provides an electronic signature generated using a private key of the user A to the target data to be registered in the blockchain data. Then, the user A broadcasts a transaction including the target data to which the electronic signature is provided on the P2P network. By this means, it is guaranteed that a holder of the target data is the user A.

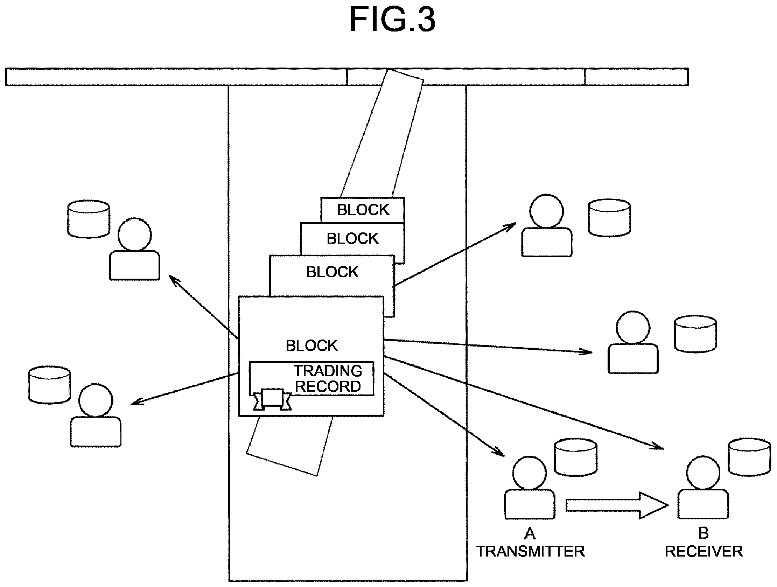

FIG. 3 is a view illustrating an aspect where the target data is transferred from the user A to a user B in the blockchain system. The user A puts a public key of the user B in a transaction by providing the electronic signature generated using the private key of the user A to the transaction. By this means, it is indicated that the target data is transferred from the user A to the user B. Further, the user B may acquire a public key of the user A from the user A to acquire the target data to which the electronic signature is provided or which is encrypted upon trading of the target data.

Further, in the blockchain system, it is also possible to put other target data different from virtual currency in the blockchain data to be used for exchanging existing data of virtual currency such as the blockchain data of Bitcoin, by utilizing, for example, a side chain technology.

### <2. First embodiment>

Outline of the peer-to-peer database has been described above. Subsequently, a first embodiment of the present disclosure will be described.

### (2.1. Outline)

First, outline of the first embodiment of the present disclosure will be described.

As described above, in recent years, service using a P2P database including blockchain data has been actively developed. Further, the P2P database is possible to prevent falsification, or the like, of registered data, and store registered data with high reliability by a mutual surveillance effect of nodes by a plurality of business operators.

Further, there is a case where levels of reliability of the respective P2P databases may be different from each other in accordance with various kinds of information regarding the respective P2P databases. For example, there is a case where the degrees of the reliability of the respective P2P databases may be different from each other in accordance with types, operators, or the like, of respective P2P database infrastructures. For example, in a case where a type of a P2P database infrastructure is a "private type (P2P database infrastructure operated by a single organization)", there is a possibility that processing to be performed for updating the P2P database (such as, for example, consensus building) is fraudulently operated, node apparatuses are switched, or the like, by an operator of the P2P database infrastructure.

However, with the above-described technology of Patent Literature 1, or the like, it has been impossible to calculate reliability of a P2P database. Therefore, in a case where the user utilizes service provided using a plurality of P2P databases, the user cannot recognize reliability of the respective P2P databases, so that the user cannot appropriately deal with registered data in the respective P2P databases. Further, the user cannot appropriately decide a P2P database among the plurality of P2P databases, in which data to be registered (hereinafter, referred to as "registration target data" for descriptive purpose) should be registered.

In view of the above-described circumstances, a discloser of the present disclosure has reached creation of the technology according to the present disclosure. According to the present disclosure, it is possible to calculate reliability of a P2P database on the basis of information regarding the P2P database (hereinafter, also referred to as "P2P database information" for descriptive purpose). For example, according to the present disclosure, it is possible to calculate reliability of a P2P database on the basis of information indicating a type or an operator of a P2P database infrastructure (or a P2P network), the number of nodes (or the number of members, or the like,) connected to the P2P network, a data amount (or the number of blocks in the blockchain data, or the like,) of the P2P database, an operation period (or date and time at which the P2P database is created), updating frequency or a period elapsed since final update time (or date and time at which the P2P database has been updated last time), software (such as, for example, middleware) to be used for processing regarding the P2P database, or the like, as the P2P database information.

By this means, because the user can recognize reliability of a plurality of respective P2P databases, the user can appropriately deal with registered data in the respective P2P databases. Further, the user can appropriately decide a P2P database among the plurality of P2P databases, in which registration target data should be registered.

### (2.2. System configuration example)

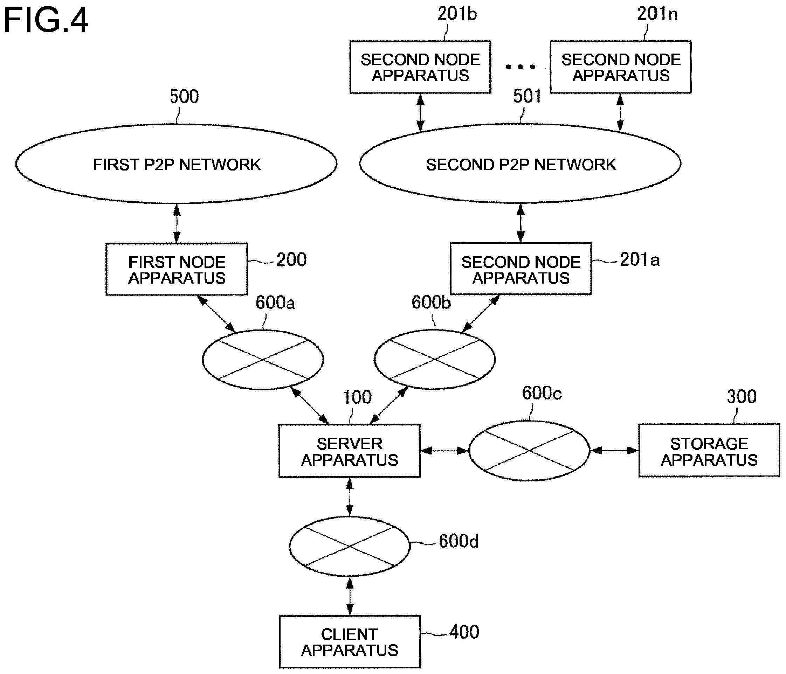

The outline of the present embodiment has been described above. Subsequently, a configuration example of an information processing system according to the present embodiment will be described with reference to FIG. 4.

As illustrated in FIG. 4, the information processing system according to the present embodiment includes a server apparatus 100, node apparatuses (in the drawing, a first node apparatus 200, second node apparatuses 201a to 201n), a storage apparatus 300 and a client apparatus 400. Further, the first node apparatus 200 is connected to a first P2P network 500, and the second node apparatuses 201a to 201n are respectively connected to a second P2P network 501. Still further, the server apparatus 100 is connected to the first node apparatus 200 via a network 600a, the server apparatus 100 is connected to the second node apparatus 201a via a network 600b, the server apparatus 100 is connected to the storage apparatus 300 via a network 600c, and the server apparatus 100 is connected to the client apparatus 400 via a network 600d.

Note that a configuration of the information processing system according to the present embodiment is not limited to the configuration in FIG. 4. For example, the number of respective apparatuses which constitute the information processing system may be changed as appropriate.

While content of service which can be provided by the information processing system is not particularly limited, in the present specification, a case will be considered as an example where the information processing system provides management service such as academic achievement records of students (for example, records regarding test results, total units earned, acquired qualifications, or the like), and activity records of students (for example, records regarding club activity, student-body activity, attendance, or the like) (hereinafter, referred to as "academic achievement and activity record service" for descriptive purpose), to respective educational institutions (such as, for example, a nursery school, a kindergarten, an elementary school, a junior high school, a high school, a university, a graduate school, a cram school, a preparatory school and a school for acquiring qualifications). That is, the user who utilizes the information processing system includes teachers, or the like, who belong to the respective educational institutions, but not limited to these. For example, the user who utilizes the information processing system may include a student himself/herself, parents of the student, an arbitrary company which tries to utilize the academic achievement records of students, or the like.

### (Server apparatus 100)

The server apparatus 100 is an information processing apparatus which calculates reliability of the P2P databases on the basis of the P2P database information. More specifically, the server apparatus 100 can calculate reliability of the respective P2P databases on the basis of the P2P database information of a P2P database held by the first node apparatus 200 and a P2P database held by the second node apparatus 201a.

Here, while it is assumed that the "reliability of the P2P databases" is an index value indicating proof falsification of registered data of the P2P databases, the reliability is not necessarily limited to this. For example, the reliability of the P2P databases may be concept (such as, for example, authenticity and credibility of the registered data) equivalent to proof falsification of the registered data of the P2P databases. Further, the reliability of the P2P databases may be interpreted as "reliability of the P2P networks", "reliability of the node apparatuses", or the like. Further, while it is assumed that the reliability of the P2P databases is numerical data, the reliability is not necessarily limited to this. For example, the reliability of the P2P databases may be information selected from several types of candidates prepared in advance, such as "hugely reliable", "reliable", "not so reliable" and "unreliable".

Further, while it is assumed that the "P2P database information" is information indicating a type or an operator of a P2P database infrastructure (or a P2P network), the number of nodes (or the number of members, or the like,) connected to the P2P network, a data amount (or the number of blocks in the blockchain data, or the like,) of the P2P database, an operation period (or date and time at which the P2P database is created), updating frequency or a period elapsed since final update time (or date and time at which the P2P database has been updated last time), software (such as, for example, middleware) to be used for processing regarding the P2P database, or the like, the P2P database information is not necessarily limited to this. For example, the P2P database information includes some kinds of parameters, or meta-information, or the like, regarding the P2P database, the P2P network, the node apparatus, or the like. Further, the P2P database information may be interpreted as "information regarding the P2P network", "information regarding the node apparatus", or the like.

The server apparatus 100 calculates reliability of the P2P databases by acquiring the above-described P2P database information from the node apparatuses (in this example, the first node apparatus 200 and the second node apparatus 201a). Note that, while it is assumed that the node apparatus acquires the P2P database information using a predetermined program (for example, a smart contract or a chain code in Hyperledger. Hereinafter, also referred to as a "P2P database program" for descriptive purpose) which is provided in the P2P database and which is to be executed on the P2P database, an acquisition method of the P2P database information is not necessarily limited to this. Further, an acquisition source of the P2P database information is not necessarily limited to the node apparatus. For example, the server apparatus 100 may acquire the P2P database information from an arbitrary external apparatus which can collect the P2P database information (such as, for example, an application server apparatus which manages the respective node apparatuses and a cloud server), an application programming interface (API, for example, an API to be used for managing the respective node apparatuses), or the like, for the P2P databases.

Further, the server apparatus 100 may calculate reliability of the P2P databases using information provided from outside (hereinafter, also referred to as "externally provided information" for descriptive purpose). While it is assumed that an acquisition source of the externally provided information (that is, "outside") is, for example, a predetermined social networking service (SNS) site, a predetermined news site, a predetermined website on which an exchange rate, or the like, are posted, or the like, the acquisition source is not necessarily limited to these. For example, in a case where there exists an external system, or the like, which evaluates reliability, or the like, of the P2P databases (or information corresponding to the reliability of the P2P databases, or the like), the system can become the acquisition source of the externally provided information. Further, while it is assumed that content of the externally provided information is information regarding word-of-mouth as to the P2P databases, evaluation (such as "Like!" in facebook (registered trademark), "+1" in google+ (registered trademark), "retweet" in twitter (registered trademark), other "good/bad assessment", "useful/not useful" and "five-grade evaluation"), information regarding content of the news, information regarding a currency exchange situation managed by the P2P databases, or the like, the content is not necessarily limited to these. More specifically, the externally provided information may be any information if the information is information relating to reliability of the P2P databases.

Further, the server apparatus 100 is an information processing apparatus which provides various kinds of functions in the academic achievement and activity record service to the client apparatus 400. Further, for example, the server apparatus 100 also provides information regarding reliability of the P2P databases (hereinafter, also referred to as "reliability information" for descriptive purpose) which are acquisition sources of the data, to the client apparatus 400 when the server apparatus 100 provides various kinds of data in the service (such as, for example, performance data) to the client apparatus 400. By this means, because the user who operates the client apparatus 400 can recognize not only various kinds of data in the service but also can recognize reliability of the P2P databases which are the acquisition sources of the data, the user can appropriately deal with the provided data. For example, the user can provide a response of not using data provided from a P2P database with low reliability in important determination, preferentially using data provided from a P2P database with higher reliability, or the like.

Note that, in the present embodiment, not only the P2P database, but also the storage apparatus 300 is used, and the server apparatus 100 can also provide registered data of the storage apparatus 300 to the client apparatus 400. In this event, the server apparatus 100 can also provide information regarding reliability (hereinafter, the information will be also referred to as "reliability information" for descriptive purpose) of the storage apparatus 300 (or a database held by the storage apparatus 300) calculated using a predetermined method (or determined in advance) to the client apparatus 400. By this means, the user who operates the client apparatus 400 can also recognize the reliability of the storage apparatus 300 as well as the reliability of the P2P database. Note that a calculation method of the reliability of the storage apparatus 300 is not particularly limited. For example, the server apparatus 100 may calculate the reliability of the storage apparatus 300 on the basis of a type of the database held by the storage apparatus 300, an operator, a data amount, an operation period (or date and time at which the database is created), updating frequency, a period elapsed since final update time (or date and time at which the database has been updated last time), software (such as, for example, middleware) to be used for processing regarding the database, or the like.

Note that processing content of the server apparatus 100 is not limited to the above. For example, the server apparatus 100 may determine cost required for registering data in the P2P database or the storage apparatus 300 on the basis of the reliability of the P2P database or the storage apparatus 300. Further, the server apparatus 100 may perform processing which is typically performed in a general-purpose computer, a PC, a tablet PC, or the like. Further, a type of the server apparatus 100 is not particularly limited. For example, the server apparatus 100 may be an arbitrary apparatus including a general-purpose computer, a personal computer (PC), a tablet PC, or the like.

### (First P2P network 500, second P2P network 501)

The first P2P network 500 and the second P2P network 501 are networks on which the P2P databases are distributed. The respective node apparatuses (in this example, the first node apparatus 200, the second node apparatuses 201a to 201n) can update the P2P databases by connecting the first P2P network 500 or the second P2P network 501 while maintaining consistency with the P2P databases held by other node apparatuses.

It is assumed in the present embodiment that the first P2P network 500 is a private type network operated by a single organization, and is connected to one node apparatus (first node apparatus 200). Meanwhile, it is assumed that the second P2P network 501 is a consortium type network operated by a plurality of organizations, or a public type network for which participants are not particularly limited, and is connected to a plurality of node apparatuses (second node apparatuses 201a to 201n). Note that a type of the first P2P network 500 or the second P2P network 501 is not particularly limited to the above.

Note that a communication scheme, a type of a line, or the like, to be used in the first P2P network 500 or the second P2P network 501 are not particularly limited. For example, the first P2P network 500 or the second P2P network 501 may be realized with a leased line network such as an Internet protocol-virtual private network (IP-VPN). Further, the first P2P network 500 or the second P2P network 501 may be realized with a public network such as the Internet, a telephone network, and a satellite communication network, various kinds of local area networks (LANs) including Ethernet (registered trademark), a wide area network (WAN), or the like. Still further, the first P2P network 500 or the second P2P network 501 may be realized with a wireless communication network such as Wi-Fi (registered trademark) and Bluetooth (registered trademark).

### (First node apparatus 200, second node apparatus 201a)

The first node apparatus 200 and the second node apparatus 201a are information processing apparatuses which are respectively connected to the P2P networks (the first P2P network 500 or the second P2P network 501) and which hold P2P databases. Content of data registered in the respective P2P databases of the first node apparatus 200 or the second node apparatus 201a is not particularly limited.

The first node apparatus 200 and the second node apparatus 201a provide P2P database information to the server apparatus 100. More specifically, when the first node apparatus 200 and the second node apparatus 201a receive a request signal for requesting the P2P database information, from the server apparatus 100, the first node apparatus 200 and the second node apparatus 201a acquire the P2P database information using a P2P database program, or the like, and transmit a response signal including the P2P database information to the server apparatus 100. By this means, the server apparatus 100 can calculate reliability of the P2P databases using the P2P database information.

Further, the first node apparatus 200 and the second node apparatus 201a provide registered data in the P2P database to the server apparatus 100. More specifically, when the first node apparatus 200 and the second node apparatus 201a receive a request signal for requesting the registered data in the P2P database, from the server apparatus 100, the first node apparatus 200 and the second node apparatus 201a acquire the registered data in from the P2P database using a P2P database program, or the like, and transmit a response signal including the registered data to the server apparatus 100. By this means, the server apparatus 100 can provide academic achievement and activity record service to the client apparatus 400 using the registered data.

Note that processing content of the first node apparatus 200 or the second node apparatus 201a is not limited to the above. For example, the first node apparatus 200 or the second node apparatus 201a may provide the P2P database information or the registered data to the server apparatus 100 without receiving a request signal from the server apparatus 100. Further, in a similar manner to the server apparatus 100, a type of the first node apparatus 200 or the second node apparatus 201a is not particularly limited.

### (Storage apparatus 300)

The storage apparatus 300 is a predetermined storage apparatus used in conjunction with the P2P database in the information processing system according to the present embodiment. Further, the storage apparatus 300 provides registered data to the server apparatus 100. More specifically, when the storage apparatus 300 receives a request signal for requesting registered data, from the server apparatus 100, the storage apparatus 300 acquires registered data from a storage unit provided at the own apparatus and transmits a response signal including the registered data to the server apparatus 100. By this means, the server apparatus 100 can provide academic achievement and activity record service to the client apparatus 400 using the registered data.

Note that processing content of the storage apparatus 300 is not limited to the above. For example, the storage apparatus 300 may provide various kinds of information to be used for calculation of reliability of the own apparatus (for example, information indicating a type of a database held by the storage apparatus 300, an operator, a data amount, an operation period (or date and time at which the database is created), updating frequency, a period elapsed since final update time (or date and time at which the database has been updated last time), software (such as, for example, middleware) to be used for processing regarding the database, or the like), to the server apparatus 100. Further, content of data stored in the storage apparatus 300 is not particularly limited. Further, the storage apparatus 300 may function as a cache server apparatus which temporarily caches the registered data acquired from the P2P database. By this means, the server apparatus 100 can provide the cache data (the registered data of the P2P database) acquired from the storage apparatus 300 to the client apparatus 400 without accessing the first node apparatus 200 or the second node apparatus 201. Further, in a similar manner to the server apparatus 100, a type of the storage apparatus 300 is not particularly limited.

### (Client apparatus 400)

The client apparatus 400 is an information processing apparatus to be used by a user who receives provision of academic achievement and activity record service. For example, the user can acquire data regarding academic achievement records or activity records of students registered in the P2P database or the storage apparatus 300 via the server apparatus 100 by performing input operation on the client apparatus 400.

More specifically, in a case where the user performs input operation to request desired data, on the client apparatus 400, the client apparatus 400 transmits a request signal for requesting the data to the server apparatus 100. The server apparatus 100 which has received the request signal acquires target data from the P2P database or the storage apparatus 300 and provides the data to the client apparatus 400 along with reliability information of the acquisition source. The client apparatus 400 provides the data and the reliability information to the user via an output unit (such as, for example, a display apparatus such as a display, a sound output apparatus such as a speaker, and a tactile sense presentation apparatus such as an actuator), which functions as a user interface (hereinafter, also referred to as a "UI" for descriptive purpose). By this means, the user can not only acquire desired data but also can recognize reliability information of the acquisition source of the data.

Note that processing content of the client apparatus 400 is not limited to the above. For example, the client apparatus 400 may perform processing which is typically performed at a general-purpose computer, a PC, a tablet PC, or the like. Further, in a similar manner to the server apparatus 100, a type of the client apparatus 400 is not particularly limited.

### (Network 600)

The network 600 is a network which connects between the server apparatus 100 and the first node apparatus 200, between the server apparatus 100 and the second node apparatus 201a, between the server apparatus 100 and the storage apparatus 300, and between the server apparatus 100 and the client apparatus 400. Note that, in a similar manner to the first P2P network 500 and the second P2P network 501, a communication scheme, a type of a line, to be used at the network 600 are not particularly limited.

The configuration example of the information processing system according to the present embodiment has been described above. Note that the above-described configuration described with reference to FIG. 4 is merely an example, and the configuration of the information processing system according to the present embodiment is not limited to this example. For example, all or part of functions of the server apparatus 100 may be provided at the first node apparatus 200, the second node apparatus 201a, the storage apparatus 300 or the client apparatus 400. For example, software which provides all or part of the functions of the server apparatus 100 may be executed at the first node apparatus 200, or the like. Further, inversely, the server apparatus 100 may realize all or part of functions of other apparatuses. The configuration of the information processing system according to the present embodiment can be flexibly transformed in accordance with specifications and operation.

### (2.3. Functional configuration example of server apparatus 100)

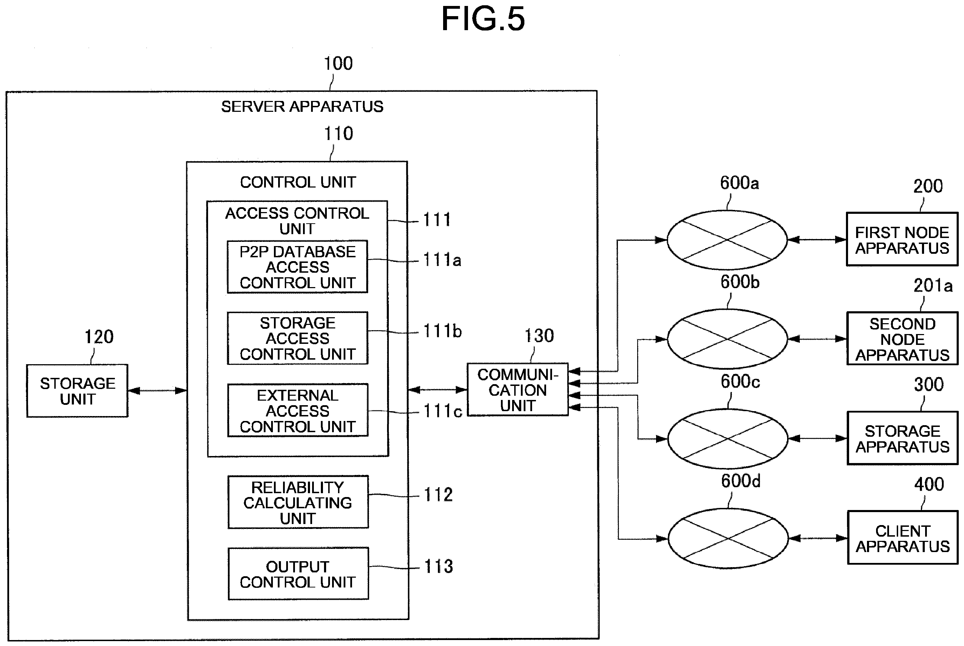

The configuration example of the information processing system according to the present embodiment has been explained in the above description. Subsequently, a functional configuration example of the server apparatus 100 will be described with reference to FIG. 5.

As illustrated in FIG. 5, the server apparatus 100 includes a control unit 110, a storage unit 120 and a communication unit 130.

### (Control unit 110)

The control unit 110 is a functional component which comprehensively controls overall processing performed by the server apparatus 100. For example, the control unit 110 can control start-up and stop of an output unit (not illustrated), the communication unit 130, or the like, using a control signal. Further, in the present embodiment, the control unit 110 realizes acquisition of data, or the like, from the first node apparatus 200, the second node apparatus 201a, or the storage apparatus 300 by an access control unit 111 being provided. Further, the control unit 110 provides a response signal including the data acquired from the first node apparatus 200, the second node apparatus 201a or the storage apparatus 300 and reliability information of the acquisition source of the data to the client apparatus 400 via the communication unit 130. Note that control content of the control unit 110 is not limited to these. For example, the control unit 110 may control processing which is typically performed at various kinds of servers, a general-purpose computer, a PC, a tablet PC, or the like.

### (Access control unit 111)

The access control unit 111 is a functional component which controls access to the first node apparatus 200, the second node apparatus 201a, or the storage apparatus 300, and includes a P2P database access control unit 111a, a storage access control unit 111b and an external access control unit 111c.

When the server apparatus 100 calculates reliability of the P2P database, the access control unit 111 realizes access to the first node apparatus 200 or the second node apparatus 201a using the P2P database access control unit 111a and realizes access to a predetermined external apparatus or an external system using the external access control unit 111c. By this means, the server apparatus 100 can acquire the P2P database information, or the like, to be used for calculation of the reliability of the P2P database.

Further, when the client apparatus 400 transmits a request signal to the server apparatus 100, the access control unit 111 recognizes requested content by analyzing the request signal. Then, in a case where it is necessary to acquire data, or the like, from the P2P database, the access control unit 111 realizes access to the first node apparatus 200 or the second node apparatus 201a using the P2P database access control unit 111a. Further, in a case where it is necessary to acquire data, or the like, from the storage apparatus 300, the access control unit 111 realizes access to the storage apparatus 300 using the storage access control unit 111b.

Note that the P2P database access control unit 111a, the storage access control unit 111b and the external access control unit 111c provided at the access control unit 111 may be integrated to be embodied as one functional component.

### (P2P database access control unit 111a)

The P2P database access control unit 111a is a functional component which realizes access to the first node apparatus 200 or the second node apparatus 201a. More specifically, when the server apparatus 100 calculates reliability of the P2P database, the P2P database access control unit 111a generates a request signal for requesting acquisition of the P2P database information and transmits the request signal to the first node apparatus 200 or the second node apparatus 201a. By this means, the P2P database access control unit 111a realizes acquisition of the P2P database information.

Further, in a case where it is decided that it is necessary to acquire data from the P2P database or register data in the P2P database through analysis of the request signal from the client apparatus 400, the P2P database access control unit 111a generates a new request signal for requesting acquisition of data, or the like, on the basis of the requested content, and transmits the request signal to the first node apparatus 200 or the second node apparatus 201a. By this means, the P2P database access control unit 111a realizes acquisition of data, or the like, from the P2P database. Note that the above-described processing by the P2P database access control unit 111a can be changed as appropriate. For example, the P2P database access control unit 111a may transmit the request signal transmitted from the client apparatus 400 as is to the first node apparatus 200 or the second node apparatus 201a without generating a new request signal.

### (Storage access control unit 111b)

The storage access control unit 111b is a functional component which realizes access to the storage apparatus 300 on the basis of the request signal from the client apparatus 400. More specifically, in a case where it is decided that it is necessary to acquire data from the storage apparatus 300 or register data in the storage apparatus 300 through analysis of the request signal from the client apparatus 400, the storage access control unit 111b generates a new request signal for requesting acquisition of data, or the like, on the basis of the requested content and transmits the request signal to the storage apparatus 300. By this means, the storage access control unit 111b realizes acquisition of data, or the like, from the storage apparatus 300. Note that the above-described processing by the storage access control unit 111b can be changed as appropriate. For example, in a similar manner to the P2P database access control unit 111a, the storage access control unit 111b may transmit the request signal transmitted from the client apparatus 400 as is to the storage apparatus 300 without generating a new request signal.

### (External access control unit 111c)

The external access control unit 111c is a functional component which realizes access to a predetermined external apparatus or an external system. More specifically, when the server apparatus 100 calculates reliability of the P2P database, the external access control unit 111c generates a request signal for requesting acquisition of externally provided information and transmits the request signal to a predetermined external apparatus or an external system. By this means, the external access control unit 111c realizes acquisition of the externally provided information. Note that the above-described processing by the external access control unit 111c can be changed as appropriate. For example, the external access control unit 111c may receive provision of externally provided information from a predetermined external apparatus or an external system without transmitting a request signal.

### (Reliability calculating unit 112)

The reliability calculating unit 112 is a functional component which calculates reliability of the P2P database on the basis of the P2P database information or the externally provided information. More specifically, the reliability calculating unit 112 calculates reliability of a P2P database on the basis of information indicating a type or an operator of a P2P database infrastructure (or a P2P network), the number of nodes (or the number of members, or the like,) connected to the P2P network, a data amount (or the number of blocks in the blockchain data, or the like,) of the P2P database, an operation period (or date and time at which the P2P database is created), updating frequency or a period elapsed since final update time (or date and time at which the P2P database has been updated last time), software (such as, for example, middleware) to be used for processing regarding the P2P database, or the like, as the P2P database information.

For example, in a case where there exist a P2P database whose type of the P2P database infrastructure is a "private type (P2P database infrastructure operated by a single organization)", and a P2P database whose type of the P2P database infrastructure is a "consortium type (P2P database infrastructure operated by a plurality of organizations)", the reliability calculating unit 112 may calculate higher reliability for the consortium type P2P database in consideration of a mutual surveillance effect by a plurality of organizations. Further, the reliability calculating unit 112 may calculate higher reliability of the P2P database as the number of nodes connected to the P2P network is larger in consideration of a mutual surveillance effect between nodes. Further, in a case where there exist a P2P database whose operator of the P2P database infrastructure is "national institution" and a P2P database whose operator of the P2P database infrastructure is an "individual", the reliability calculating unit 112 may calculate higher reliability for the P2P database whose operator is national institution in consideration of a scale, reliability, or the like, of the P2P database. Further, the reliability calculating unit 112 may calculate higher reliability for the P2P database as a data amount (or the number of blocks in blockchain data, or the like) of the P2P database is larger, as an operation period is longer, as updating frequency is higher, or as a period elapsed since final update time is shorter, in consideration of operation performance of the P2P database. Further, the reliability calculating unit 112 may calculate higher reliability for the P2P database as more widely and generally distributed software is used for processing regarding the P2P database, in consideration of performance of the P2P database. Note that the above is merely an example, and a calculation method of the reliability of the P2P database based on the P2P database information is not limited to these.

Further, the reliability calculating unit 112 may also calculate the reliability of the P2P database on the basis of information regarding word-of-mouth as to the P2P databases, evaluation (such as "Like!" in facebook (registered trademark), "+1" in google+ (registered trademark), "retweet" in twitter (registered trademark), other "good/bad assessment", "useful/not useful" and "five-grade evaluation"), information regarding content of the news, information regarding a currency exchange situation managed by the P2P databases, or the like, which are acquired from a predetermined SNS site, a predetermined news site, a predetermined website on which an exchange rate, or the like, as the externally provided information.

For example, the reliability calculating unit 112 may calculate higher reliability for the P2P database which is more highly evaluated or the P2P database which manages currency exchanged at a higher rate. Further, the reliability calculating unit 112 may calculate higher reliability for the P2P database which is more highly evaluated by analyzing and recognizing the meaning of word of mouth or content of news regarding the P2P database. Note that the above is merely an example, and a calculation method of the reliability of the P2P database based on the externally provided information is not limited to these. Further, the reliability calculating unit 112 does not have to necessarily use both the P2P database information and the externally provided information, and may calculate the reliability of the P2P database using at least one of them.

The reliability calculating unit 112 calculates the reliability of the P2P database using a predetermined (or autonomously determined) decision logic (algorithm) as described above. Note that the decision logic to be used for calculation of the reliability may be changed as appropriate. Further, the reliability calculating unit 112 stores information (reliability information) regarding the calculated reliability in the storage unit 120. By this means, when the output control unit 113 provides the registered data of the P2P database to the user, or when the user tries to register registration target data in the P2P database, the output control unit 113 can provide the reliability information acquired from the storage unit 120 to the user.

### (Output control unit 113)

The output control unit 113 is a functional component which controls output of the registered data acquired from the first node apparatus 200, the second node apparatus 201a or the storage apparatus 300 and the reliability information to the user (or an external apparatus). More specifically, the output control unit 113 controls output of the client apparatus 400 so that the user can recognize correspondence between each piece of registered data and reliability of the P2P database, or the like, which is an acquisition source of the data. For example, the output control unit 113 may allow the user to recognize correspondence between each piece of registered data and reliability of the P2P database, or the like, which is an acquisition source of the data by determining a region (or a window, or the like) within a display in which each piece of registered data of the P2P database is displayed, color when each piece of registered data is displayed, texture (such as, for example, a pattern and texture), a mark, a character, or the like to be added, in accordance with the reliability of the P2P database.

Further, the output control unit 113 can also cause the client apparatus 400 to output the reliability information of the P2P database, or the like, in association with registration of registration target data in the P2P database by the user (or an external apparatus). For example, the output control unit 113 may cause the reliability information of each P2P database, or the like, to be displayed in a registration screen (such as, for example, a selection screen of the P2P database, or the like, in which data is to be registered) for registering registration target data in the P2P database, or the like. By this means, the user can appropriately select the P2P database, or the like, in which the data is to be registered (or can appropriately decide whether or not to register the registration target data in the P2P database, or the like).

Note that the above is merely an example, and an output control method of the reliability information is not limited to these. For example, in a case where the client apparatus 400 includes a sound output apparatus such as a speaker, a light source apparatus such as a lamp, a tactile sense presentation apparatus such as an actuator, or the like, the output control unit 113 may control output of the reliability information by controlling these apparatuses.

In a case where the output control unit 113 controls output by the client apparatus 400 as described above, the output control unit 113 generates control information indicating control content and transmits the control information to the client apparatus 400 via the communication unit 130.

### (Storage unit 120)

The storage unit 120 is a functional component which stores various kinds of information. For example, the storage unit 120 stores the P2P database information, the externally provided information, the reliability information, a request signal from the client apparatus 400, data, or the like, acquired from the P2P database or the storage apparatus 300, or stores programs, parameters, or the like, to be used by respective functional components of the server apparatus 100. Note that information stored in the storage unit 120 is not limited to these.

### (Communication unit 130)

The communication unit 130 is a functional component which controls various kinds of communication. For example, when the server apparatus 100 calculates reliability of the P2P database, the communication unit 130 transmits a request signal for requesting the P2P database information to the first node apparatus 200 or the second node apparatus 201a. Further, the communication unit 130 transmits a request signal for requesting externally provided information to a predetermined external apparatus or an external system. Then, the communication unit 130 receives a response signal including the P2P database information or the externally provided information, which is to be a response to these request signals.

Further, the communication unit 130 receives a request signal for requesting acquisition of user desired data from the client apparatus 400. Then, the communication unit 130 transmits the request signal generated by the P2P database access control unit 111a to the first node apparatus 200 or the second node apparatus 201a, and receives a response signal including data, or the like, designated by the request signal. Further, the communication unit 130 transmits the request signal generated by the storage access control unit 111b to the storage apparatus 300 and receives a response signal including data, or the like, designated by the request signal. Thereafter, the communication unit 130 transmits a response signal including the data and the reliability information, or the like, from the first node apparatus 200, the second node apparatus 201a or the storage apparatus 300, to the client apparatus 400. Note that information communicated by the communication unit 130 and a case where the communication unit 130 performs communication are not limited to these.

The functional configuration example of the server apparatus 100 has been described above. Note that the above-described functional configuration described using FIG. 5 is merely an example, and the functional configuration example of the server apparatus 100 is not limited to this example. For example, the server apparatus 100 does not necessarily have to include all the components illustrated in FIG. 5. Further, the functional configuration of the server apparatus 100 can be flexibly transformed in accordance with specifications and operation.

### (2.4. Functional configuration example of first node apparatus 200)

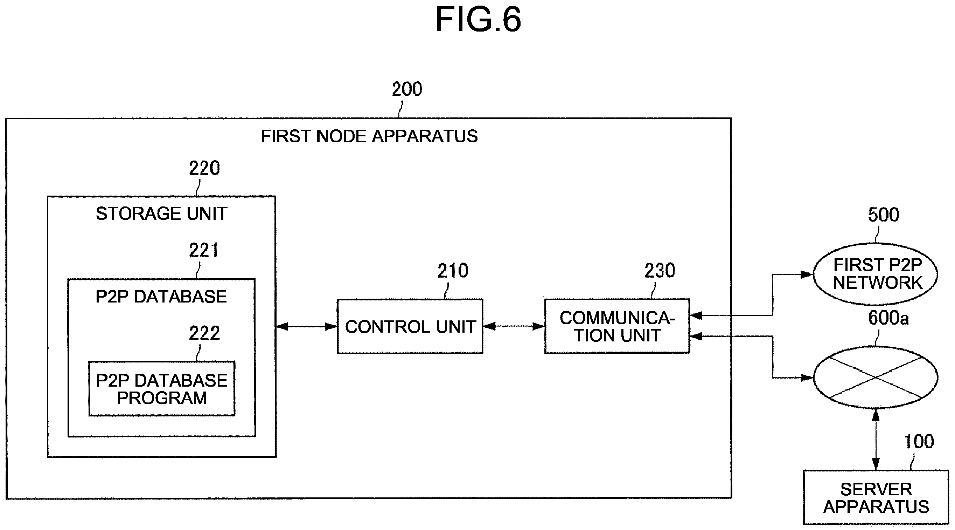

The functional configuration example of the server apparatus 100 has been explained in the description above. Subsequently, a functional configuration example of the first node apparatus 200 will be described with reference to FIG. 6. Here, because the first node apparatus 200 and the second node apparatus 201a can include the same functional components, here, the functional configuration example of the first node apparatus 200 will be described.

As illustrated in FIG. 6, the first node apparatus 200 includes a control unit 210, a storage unit 220 and a communication unit 230.

### (Control unit 210)

The control unit 210 is a functional component which comprehensively controls overall processing performed by the first node apparatus 200. For example, the control unit 210 can control start-up and stop of an output unit (not illustrated), the communication unit 230, or the like, using a control signal. Further, the control unit 210 controls acquisition processing of the P2P database information on the basis of the request signal for the P2P database information provided from the server apparatus 100. Further, the control unit 210 controls acquisition processing of the registered data from the P2P database, or registration processing of registration target data in the P2P database on the basis of the request signal provided from the server apparatus 100. Note that control content of the control unit 210 is not limited to these. For example, the control unit 210 may control processing which is typically performed at various kinds of servers, a general-purpose computer, a PC, a tablet PC, or the like.

### (Storage unit 220)

The storage unit 220 is a functional component which stores various kinds of information. For example, the storage unit 220 stores programs, parameters, or the like, to be used by respective functional components of the first node apparatus 200. Note that content of information stored in the storage unit 220 is not limited to these. As illustrated in FIG. 6, the storage unit 220 includes a P2P database 221.

### (P2P database 221)

The P2P database 221 is a database held by the first node apparatus 200, and is, for example, blockchain data. As described above, in the P2P database 221, data of higher importance such as data for which guaranty for authenticity is asked among academic achievement records, activity records, or the like, of students is registered. An electronic signature generated using an encryption key may be provided to various kinds of data to be registered in the P2P database 221 or the data may be encrypted using an encryption key. Note that the data to be registered in the P2P database 221 is not limited to these. For example, in a case where charging is performed when data is acquired from the P2P database 221 or when data is registered in the P2P database 221, data regarding assets possessed by each user (for example, coins in Bitcoin) may be registered in the P2P database 221. As illustrated in FIG. 6, the P2P database 221 includes a P2P database program 222.

### (P2P database program 222)

The P2P database program 222 is a predetermined program which is provided at the P2P database 221 and which is to be executed on the P2P database 221. By the P2P database program 222 being used, various kinds of processing including exchange of virtual currency such as, for example, Bitcoin is realized in accordance with a predetermined rule while consistency is maintained. Further, by the P2P database program 222 being provided at the P2P database 221, a risk of the program being fraudulently modified is reduced. While the P2P database program 222 is a chain code at Hyperledger, the P2P database program 222 is not limited to this. For example, the P2P database program 222 may indicate a smart contract.

The P2P database program 222 can realize overall processing to be performed for the P2P database 221. For example, the P2P database program 222 can realize acquisition processing of registered data, registration processing of registration target data, or the like, which is to be performed by accessing the P2P database 221. Note that the processing to be realized by the P2P database program 222 is not limited to the above. Development language of the P2P database program 222, the number of P2P database programs 222 provided on the P2P database 221, or the like, are not particularly limited.

### (Communication unit 230)

The communication unit 230 is a functional component which controls various kinds of communication with an external apparatus. For example, the communication unit 230 receives a request signal for the P2P database information from the server apparatus 100, and transmits a response signal including the P2P database information acquired on the basis of the request signal to the server apparatus 100. Further, the communication unit 230 receives a request signal for registered data of the P2P database 221 from the server apparatus 100, and transmits a response signal including the registered data, or the like, acquired on the basis of the request signal to the server apparatus 100. Further, the communication unit 230 realizes registration of registration target data in the P2P database 221 by receiving a request signal including the registration target data to be registered in the P2P database 221, from the server apparatus 100.

Further, while, in this example, only one first node apparatus 200 is connected to the first P2P network 500, in a case where a plurality of first node apparatuses 200 is connected to the first P2P network 500, the communication unit 230 also controls various kinds of communication with other first node apparatuses 200. More specifically, the communication unit 230 transmits and receives information, or the like, to be used for updating of the P2P database 221 (such as, for example, information to be used for consensus building) in communication with other first node apparatuses 200 as appropriate. Note that information to be communicated by the communication unit 230 and a case where the communication unit 230 performs communication are not limited to these.

The functional configuration example of the first node apparatuses 200 has been described above. Note that the above-described functional configuration described using FIG. 6 is merely an example, and the functional configuration example of the first node apparatuses 200 is not limited to this example. For example, the first node apparatuses 200 does not necessarily have to include all the components illustrated in FIG. 6. Further, the first node apparatus 200 and the second node apparatus 201a may include functional configurations different from each other. Further, the functional configuration of the first node apparatus 200 or the second node apparatus 201a can be flexibly transformed in accordance with specifications and operation.

### (2.5. Functional configuration example of storage apparatus 300)

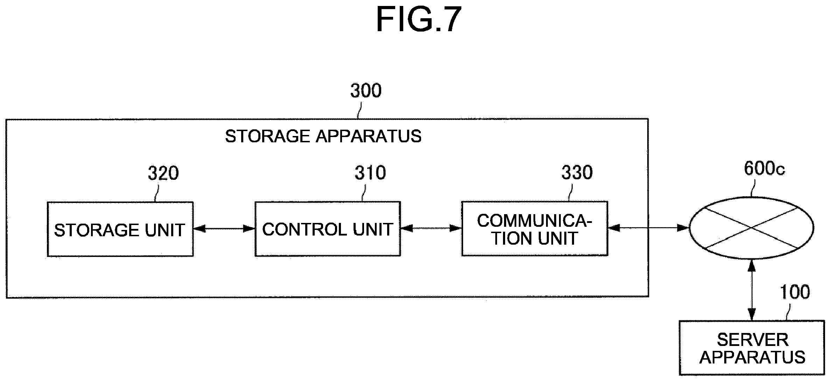

The functional configuration example of the first node apparatus 200 has been described above. Subsequently, a functional configuration example of the storage apparatus 300 will be described with reference to FIG. 7.

As illustrated in FIG. 7, the storage apparatus 300 includes a control unit 310, a storage unit 320 and a communication unit 330.

### (Control unit 310)

The control unit 310 is a functional component which comprehensively controls overall processing performed by the storage apparatus 300. For example, the control unit 310 can control start-up and stop of an output unit (not illustrated), the communication unit 330, or the like, using a control signal. Further, the control unit 310 controls acquisition processing of the registered data from the storage unit 320, or registration processing of registration target data in the storage unit 320 on the basis of the request signal provided from the server apparatus 100. Note that control content of the control unit 310 is not limited to these. For example, the control unit 310 may control processing which is typically performed at various kinds of servers, a general-purpose computer, a PC, a tablet PC, or the like.

### (Storage unit 320)

The storage unit 320 is a functional component which stores various kinds of data. For example, as described above, the storage unit 320 stores data, or the like, for which guaranty of authenticity is not asked (or for which high authenticity is not asked) among academic achievement records, activity records, or the like, of students. Further, the storage unit 320 stores programs, parameters, or the like, to be used by respective functional components of the storage apparatus 300. Note that content of data stored in the storage unit 320 is not limited to these.

### (Communication unit 330)

The communication unit 330 is a functional component which controls various kinds of communication with the server apparatus 100. For example, the communication unit 330 receives a request signal from the server apparatus 100, and transmits a response signal including registered data acquired on the basis of the request signal to the server apparatus 100. Further, the communication unit 330 realizes registration of registration target data in the storage unit 320 by receiving a request signal including the registration target data from the server apparatus 100. Note that information to be communicated by the communication unit 330 and a case where the communication unit 330 performs communication are not limited to these.

The functional configuration example of the storage apparatus 300 has been described above. Note that the above-described functional configuration described using FIG. 7 is merely an example, and the functional configuration example of the storage apparatus 300 is not limited to this example. For example, the storage apparatus 300 does not necessarily have to include all the components illustrated in FIG. 7. Further, the functional configuration of the storage apparatus 300 can be flexibly transformed in accordance with specifications and operation.

### (2.6. Functional configuration example of client apparatus 400)

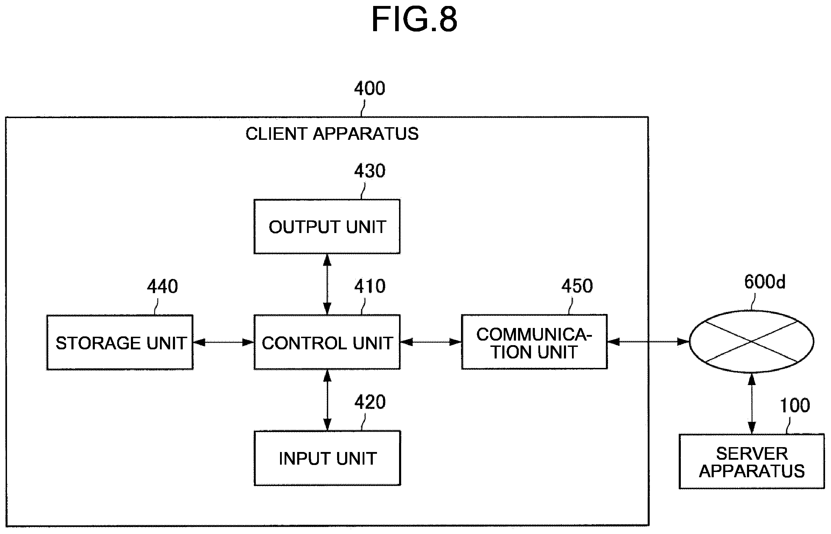

The functional configuration example of the storage apparatus 300 has been explained in the description above. Subsequently, a functional configuration example of the client apparatus 400 will be described with reference to FIG. 8.

As illustrated in FIG. 8, the client apparatus 400 includes a control unit 410, an input unit 420, an output unit 430, a storage unit 440, and a communication unit 450.

### (Control unit 410)

The control unit 410 is a functional component which comprehensively controls overall processing to be performed by the client apparatus 400. For example, the control unit 410 can control start-up and stop of the input unit 420, the output unit 430, the communication unit 450, or the like, using a control signal. Further, the control unit 410 generates a request signal for requesting acquisition of registered data from the P2P database 221 or the storage apparatus 300, or registration of registration target data in these. Further, in a case where a response signal including registered data, or the like, is transmitted by the server apparatus 100, the control unit 410 controls output of the registered data, or the like, on the basis of control information included in the response signal. Note that control content of the control unit 410 is not limited to these. For example, the control unit 410 may control processing which is typically performed at various kinds of servers, a general-purpose computer, a PC, a tablet PC, or the like.

### (Input unit 420)

The input unit 420 is a functional component which receives input by a user. For example, the input unit 420 includes an input apparatus such as a mouse, a keyboard, a touch panel, a button, a switch and a microphone, and the user can perform input operation for requesting acquisition of desired registered data, requesting registration of desired registration target data, or the like, by using these input apparatuses. Note that the input apparatus provided at the input unit 420 is not particularly limited.

### (Output unit 430)

The output unit 430 is a functional component which performs various kinds of output by being controlled by the control unit 410. For example, the output unit 430 includes a display apparatus such as a display, a sound output apparatus such as a speaker, a tactile sense presentation apparatus such as an actuator, or the like, and outputs registered data requested by the user, reliability information of the acquisition source of the registered data, or the like, to the user on the basis of control by the control unit 410. In other words, the output unit 430 functions as a UI. Note that the output apparatus provided at the output unit 430 is not limited to these.

### (Storage unit 440)

The storage unit 440 is a functional component which stores various kinds of information. For example, the storage unit 440 stores registered data, reliability information, registration target data, or the like, and stores programs, parameters, or the like, to be used by respective functional components of the client apparatus 400. Note that information stored in the storage unit 440 is not limited to these.

### (Communication unit 450)

The communication unit 450 is a functional component which controls various kinds of communication with the server apparatus 100. For example, the communication unit 450 transmits a request signal for registered data to the server apparatus 100, and receives a response signal including the registered data, reliability information, or the like. Further, the communication unit 450 realizes registration of registration target data in the P2P database 221, or the like, by transmitting a request signal including the registration target data to the server apparatus 100. Note that information to be communicated by the communication unit 450 and a case where the communication unit 450 performs communication are not limited to these.

The functional configuration example of the client apparatus 400 has been described above. Note that the above-described functional configuration described using FIG. 8 is merely an example, and the functional configuration example of the client apparatus 400 is not limited to this example. For example, the client apparatus 400 does not necessarily have to include all the components illustrated in FIG. 8. Further, the functional configuration of the client apparatus 400 can be flexibly transformed in accordance with specifications and operation.

### (2.7. Processing flow)

The functional configuration example of the client apparatus 400 has been explained in the description above. Subsequently, processing flow by the respective apparatuses will be described.

### (Reliability calculation processing example)

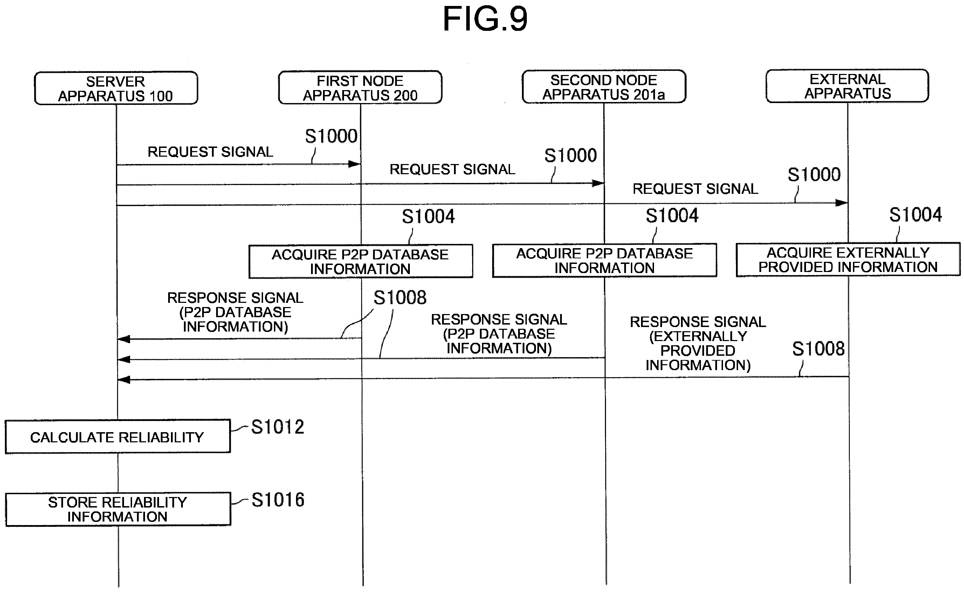

First, an example of processing flow for calculating reliability of the P2P database 221 will be described with reference to FIG. 9.

In step S1000, the P2P database access control unit 111a of the server apparatus 100 generates a request signal for requesting acquisition of P2P database information and transmits the request signal to the first node apparatus 200 and the second node apparatus 201a. Further, the external access control unit 111c generates a request signal for requesting acquisition of externally provided information and transmits the request signal to a predetermined external apparatus (or an external system).

In step S1004, the control units 210 of the first node apparatus 200 and the second node apparatus 201a acquire P2P database information on the basis of the request signal. Further, the external apparatus acquires the externally provided information on the basis of the request signal. In step S1008, the communication units 230 of the first node apparatus 200 and the second node apparatus 201a transmit a response signal including the P2P database information to the server apparatus 100, and the external apparatus transmits a response signal including the externally provided information to the server apparatus 100.

In step S1012, the reliability calculating unit 112 of the server apparatus 100 calculates reliability of the respective P2P databases 221 respectively held by the first node apparatus 200 and the second node apparatus 201a using the P2P database information and the externally provided information. In step S1016, a series of processing is finished by the reliability calculating unit 112 causing reliability information regarding the calculated reliability to be stored in the storage unit 120.

By the above-described series of processing being continuously performed at a predetermined timing (for example, at a predetermined time interval or on the basis of a predetermined trigger), reliability of the respective P2P databases 221 is updated.

### (Reliability information provision processing example)

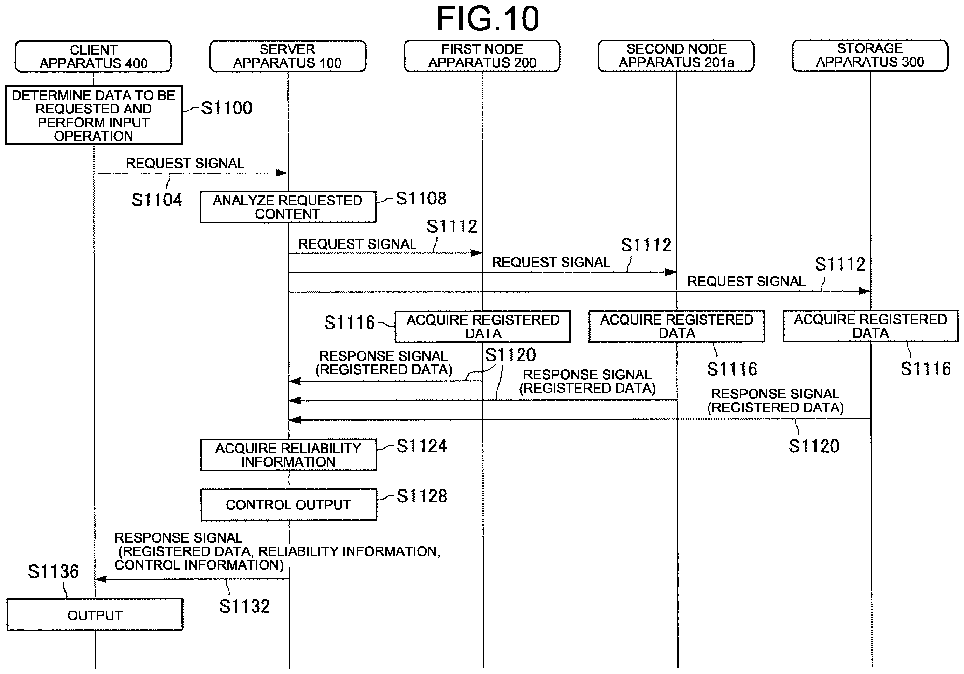

Subsequently, an example of processing flow in which the reliability information obtained through the above-described series of processing is provided to the user will be described with reference to FIG. 10.

In step S1100, the user determines registered data to be requested, and performs predetermined input operation on the input unit 420 of the client apparatus 400. In step S1104, the control unit 410 generates a request signal for requesting acquisition of registered data on the basis of the input operation and transmits the signal to the server apparatus 100 via the communication unit 450.

In step S1108, the access control unit 111 of the server apparatus 100 recognizes requested content by analyzing the request signal. In step S1112, the P2P database access control unit 111a and the storage access control unit 111b generate new request signals on the basis of the requested content, the P2P database access control unit 111a transmits the signal to the first node apparatus 200 and the second node apparatus 201a, and the storage access control unit 111b transmits the signal to the storage apparatus 300.

In step S1116, the control units 210 of the first node apparatus 200 and the second node apparatus 201a acquire registered data designated by the request signal from the P2P database 221, and the control unit 310 of the storage apparatus 300 acquires registered data designated by the request signal from the storage unit 320. Then, in step S1120, the communication units 230 of the first node apparatus 200 and the second node apparatus 201a and the communication unit 330 of the storage apparatus 300 transmit response signals including the acquired registered data to the server apparatus 100.

In step S1124, the output control unit 113 of the server apparatus 100 acquires reliability information of the P2P databases 221 held at the first node apparatus 200 and the second node apparatus 201a from the storage unit 120. In step S1128, the output control unit 113 generates control information for controlling output by the client apparatus 400 on the basis of the registered data and the reliability information.

In step S1132, the communication unit 130 transmits a response signal including the registered data, the reliability information, the control information, or the like, to the client apparatus 400. In step S1136, a series of processing is finished by the control unit 410 of the client apparatus 400 outputting the registered data and the reliability information via the output unit 430 on the basis of the control information included in the response signal.

Note that respective steps in the sequence diagram in FIG. 9 or FIG. 10 do not necessarily have to be processed in chronological order in accordance with the described order. That is, the respective steps in the sequence diagram may be processed in order different from the described order or may be processed in parallel.

### (2.8. User interface example)

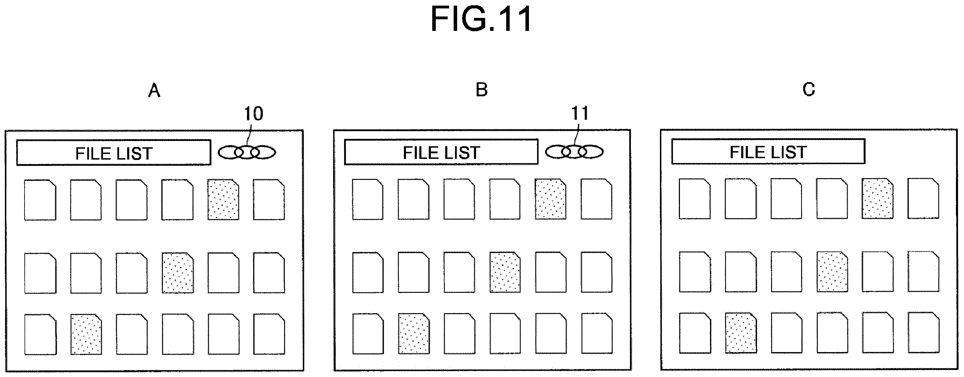

The processing flow by the respective apparatuses has been described above. Subsequently, an example of the UI when the registered data and the reliability information are provided to the user will be described with reference to FIG. 11 to FIG. 13.

As described above, the output control unit 113 of the server apparatus 100 controls output of the registered data and the reliability information acquired from the first node apparatus 200, the second node apparatus 201a or the storage apparatus 300 to the user.

For example, as illustrated in A to C in FIG. 11, the output control unit 113 may provide the reliability information to the user by controlling display of icons on a display (the output unit 430 of the client apparatus 400). More specifically, in a case where the reliability of the P2P database 221 is "high" (in the present embodiment, for example, corresponding to the P2P database 221 of the second node apparatus 201a), as illustrated in A in FIG. 11, the output control unit 113 may cause a predetermined icon 10 to be displayed at a display along with the registered data of the P2P database 221.

Then, in a case where the reliability of the P2P database 221 is "medium" (in the present embodiment, for example, corresponding to the P2P database 221 of the first node apparatus 200), as illustrated in B in FIG. 11, the output control unit 113 may cause a predetermined icon 11, whose color is different from the icon 10, to be displayed at a display along with the registered data of the P2P database 221.

Further, in a case where the reliability of the P2P database 221 is "low", or in a case where the registered data is data acquired from the storage apparatus 300, as illustrated in C in FIG. 11, the output control unit 113 may cause the registered data to be displayed without causing a predetermined icon to be displayed.

Through these kinds of display, because the user can easily recognize the reliability of the acquisition source of the registered data displayed at the display, the user can appropriately deal with respective pieces of registered data. Note that the user interface illustrated in FIG. 11 can be changed as appropriate. For example, in a case where the reliability of the P2P database 221 is "low", or in a case where the registered data is data acquired from the storage apparatus 300, the output control unit 113 may cause the user to recognize the reliability by causing a predetermined icon different from those in A and B in FIG. 11 to be displayed.

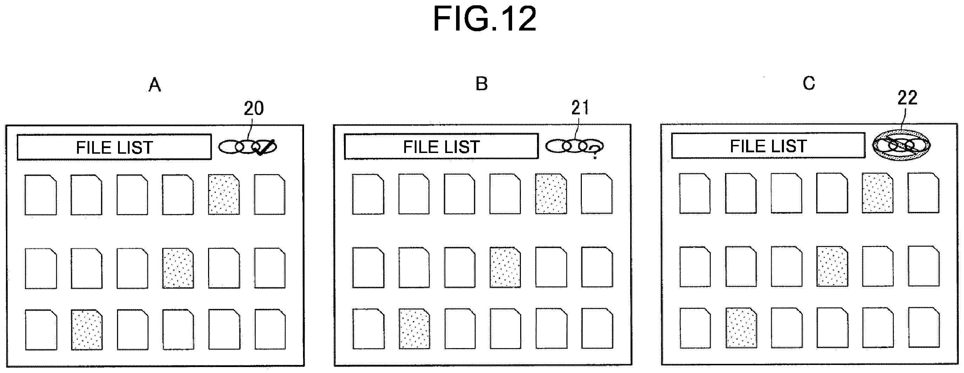

While, in FIG. 11, the reliability is indicated by existence or non-existence of the icon, or color of the icon, the reliability may be indicated by a shape (or a type) of the icon. More specifically, in a case where the reliability of the P2P database 221 is "high", as illustrated in A in FIG. 12, the output control unit 113 may cause an icon 20 to which a check mark is provided to be displayed at the display. Further, in a case where the reliability of the P2P database 221 is "medium", as illustrated in B in FIG. 12, the output control unit 113 may cause an icon 21 to which a question mark is provided to be displayed at the display. Still further, in a case where the reliability of the P2P database 221 is "low", or in a case where the registered data is data acquired from the storage apparatus 300, as illustrated in C in FIG. 12, the output control unit 113 may cause an icon 22 to which a nix sign (or a caution mark) is provided to be displayed at the display. Note that shapes (or types) of the respective icons illustrated in FIG. 12 can be changed as appropriate.

Further, the reliability may be indicated by some kind of information (such as, for example, the P2P database information or the externally provided information) being provided to an icon. For example, the reliability may be indicated by information indicating a type or an operator of the P2P database infrastructure, the number of nodes connected to the P2P network, a data amount of the P2P database 221, an operation period, updating frequency, a period elapsed since last update time, software to be used for processing regarding the P2P database 221, or the like, which are the P2P database information, being provided to an icon.

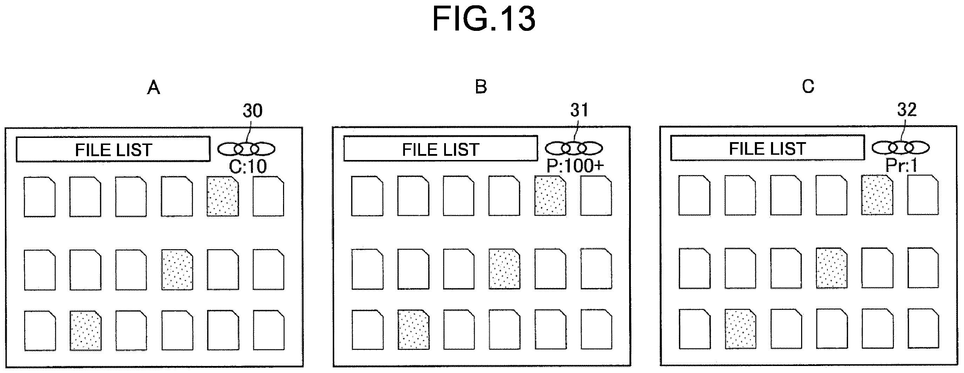

More specifically, in a case where the type is a "consortium type", and the number of nodes is 10, as illustrated in A in FIG. 13, the output control unit 113 may cause an icon 30 to which a character string of "C (Consortium): 10" is provided to be displayed at the display. Further, in a case where the type is a "public type" and the number of nodes is equal to or larger than 100, as illustrated in B in FIG. 13, the output control unit 113 may cause an icon 31 to which a character string of "P (Public): 100+" is provided to be displayed at the display. Still further, in a case where the type is a "private type" and the number of nodes is 1, as illustrated in C in FIG. 13, the output control unit 113 may cause an icon 32 to which a character string of "Pr (Private): 1" is provided to be displayed at the display.

Note that the UI when the reliability information is provided to the user is not limited to the above. For example, the reliability information may be provided to the user by the reliability information of each P2P database 221 being output with sound, or by a light corresponding to each P2P database 221 being lighted in color corresponding to the reliability information.

### <3. Second embodiment>

The first embodiment of the present disclosure has been described above. Subsequently, a second embodiment of the present disclosure will be described.

The server apparatus 100 according to the second embodiment of the present disclosure can calculate a recommendation degree of the P2P database 221 which becomes a registration destination in a case where the user tries to register registration target data in the P2P database 221, as well as provide the reliability information to the user. More specifically, the server apparatus 100 according to the present embodiment can calculate a recommendation degree of the P2P database 221 which becomes a registration destination on the basis of information regarding the registration target data (hereinafter, also referred to as "registration target data information" for descriptive purpose) and the reliability information of each P2P database 221.

By this means, even in a case where there is a plurality of P2P databases 221, the user can register the registration target data in a more appropriate P2P database 221.

### (3.1. Functional configuration example of server apparatus 100)

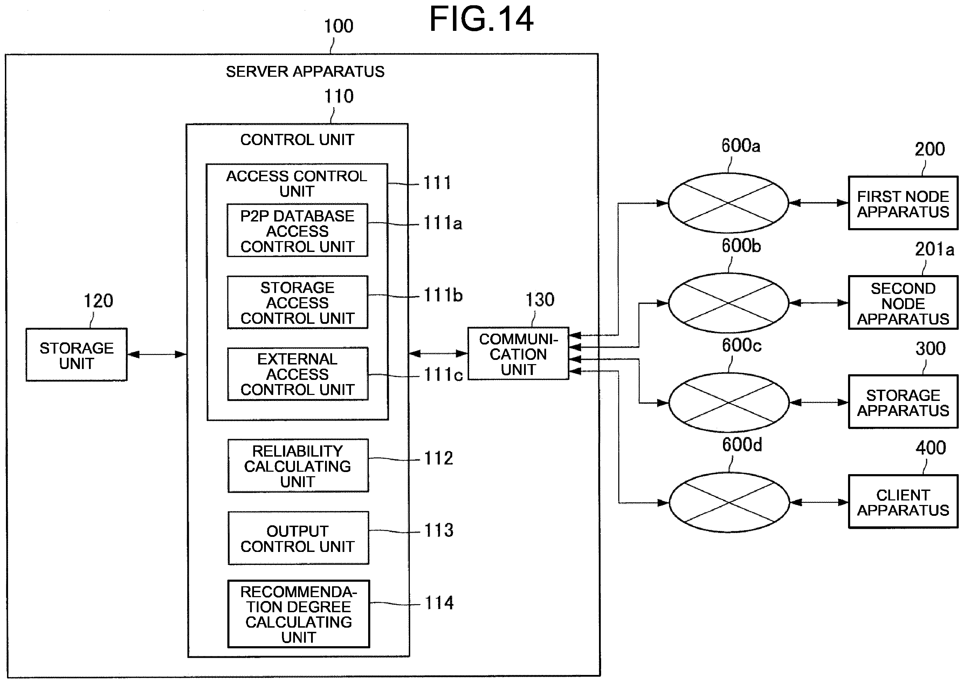

Subsequently, a functional configuration example of the server apparatus 100 according to the present embodiment will be described with reference to FIG. 14. Note that, because functional configurations of the first node apparatus 200, the second node apparatus 201a, the storage apparatus 300 and the client apparatus 400 which are apparatuses other than the server apparatus 100 can be similar to the functional configurations according to the first embodiment described above, the description will be omitted.

As illustrated in FIG. 14, the control unit 110 of the server apparatus 100 according to the present embodiment newly includes a recommendation degree calculating unit 114 compared to the functional configuration according to the first embodiment.

The recommendation degree calculating unit 114 is a functional component which calculates a recommendation degree of the P2P database 221 which becomes a registration destination on the basis of the registration target data information and the reliability information of each P2P database 221.

While it is assumed here that the "recommendation degree of the P2P database 221 which becomes a registration destination" is an index value indicating a degree of suitability of each P2P database 221 decided on the basis of proof falsification, or the like, (or authenticity, or the like), required by the registration target data, the recommendation degree is not necessarily limited to this. For example, the recommendation degree of the P2P database 221 which becomes a registration destination may be an index value indicating a degree of suitability of each P2P database 221 decided on the basis of some kind of information regarding the user (such as, for example, history information (such as use frequency of each P2P database 221), preference information and asset information), some kind of information regarding an environment around the user or a system or a usage situation of the system (such as, for example, whether or not there is a system failure, usage date and time and a status of access to the P2P database 221), or the like.

For example, in a case where cost required for data registration is determined on the basis of the reliability, or the like, of the P2P database 221, the recommendation degree of the P2P database 221 which matches assets of the user (such as, for example, coins in Bitcoin) may be calculated to be higher. Further, in a case where a certain P2P database 221 is intensively accessed, the recommendation degree of the P2P database 221 may be calculated to be lower (or higher).

Further, the recommendation degree of the P2P database 221 which becomes a registration destination may be interpreted as a "recommendation degree of the P2P network which becomes a registration destination", a "recommendation degree of a node apparatus which becomes a registration destination", or the like. Still further, while it is assumed that the recommendation degree of the P2P database 221 which becomes a registration destination is numerical data, the recommendation degree is not necessarily limited to this. For example, the recommendation degree of the P2P database 221 which becomes a registration destination may be information selected from several types of candidates prepared in advance, such as "hugely recommendable", "recommendable", "not so recommendable" and "unrecommendable".

Further, while it is assumed that the "registration target data information" is information indicating a type (or a category, or the like), a degree of importance, content (or a keyword, or the like, included in the registration target data), application (or purpose of registration, or the like), a creator, a person who has performed updating, the past registration status (for example, whether the data has already been registered in one of the P2P databases 221), or the like, of the registration target data, the registration target data information is not necessarily limited to this. For example, the registration target data information includes some kind of meta-information, or the like, of the registration target data.

In a case where the type of the registration target data is "entrance examination result data", or the like, the recommendation degree calculating unit 114 may decide that it is desired to guarantee authenticity of the registration target data more reliably, and may recommend the P2P database 221 having high reliability or the P2P database 221 having reliability corresponding to the type of the registration target data as the registration destination (in other words, may calculate a higher recommendation degree for the P2P database 221). Further, also in a case where the degree of importance of the registration target data is "high", or the like, recommendation similar to the above can be performed. Further, also in a case where the recommendation degree calculating unit 114 decides that it is desired to guarantee authenticity of the registration target data more reliably by analyzing the registration target data and recognizing the content, recommendation similar to the above can be performed. In a case where the recommendation degree is calculated by the recommendation degree calculating unit 114, the output control unit 113 causes the user (or the external apparatus) to recognize the recommendation degree of each P2P database 221 by providing information regarding the recommendation degree (hereinafter, also referred to as "recommendation degree information" for descriptive purpose) to the client apparatus 400 (or the external apparatus). Note that the output control unit 113 may cause the client apparatus 400 to output both the recommendation degree information and the reliability information or may cause the client apparatus 400 to output one of them. That is, "control of output" by the output control unit 113 is concept including, for example, control not to cause the client apparatus 400 to output one of the recommendation degree information and the reliability information.

Further, the recommendation degree calculating unit 114 can calculate the recommendation degree of each P2P database 221 as needed on the basis of change of the registration target data information. For example, in a case where the user creates the registration target data using the client apparatus 400, the recommendation degree calculating unit 114 recognizes the change by acquiring the registration target data information for the registration target data which is being created in real time. Then, the recommendation degree calculating unit 114 calculates the recommendation degree of each P2P database 221 as needed on the basis of the change, and the output control unit 113 provides the recommendation degree information to the user (or the external apparatus) as needed. For example, the output control unit 113 may cause only the P2P database 221 having the highest recommendation degree to be displayed at the display or may cause display order of a plurality of P2P databases 221 to be changed on the basis of levels of the recommendation degree. Of course, the recommendation degree calculating unit 114 may calculate the recommendation degree as needed also on the basis of the change of the reliability information of each P2P database 221. Particularly, in a case where an operation period of the P2P database 221 is short, or the like, because the reliability can frequently change, it is useful for the recommendation degree calculating unit 114 to calculate the recommendation degree as needed also on the basis of the change of the reliability information of the P2P database 221.

Note that the calculation method of the recommended degree by the recommendation degree calculating unit 114 is not limited to the above. For example, the recommendation degree calculating unit 114 may calculate the recommendation degree of each P2P database 221 also on the basis of setting by the user. More specifically, the user may be able to input the registration target data information or designate the P2P database 221 for which the recommendation degree is to be calculated. Further, the recommendation degree calculating unit 114 may calculate the recommendation degree of each P2P database 221 only using one of the registration target data information and the reliability information. For example, the recommendation degree calculating unit 114 may simply set the highest recommendation degree for the P2P database 221 having the highest reliability only using the reliability information without using the registration target data information.

Further, the recommendation degree calculating unit 114 may be provided at an apparatus other than the server apparatus 100. For example, the recommendation degree calculating unit 114 may be provided at the client apparatus 400, or the like. Further, because the functional components other than the recommendation degree calculating unit 114 among the functional components provided at the server apparatus 100 are similar to the functional components according to the first embodiment described above, the description will be omitted.

### (3.2. Processing flow)

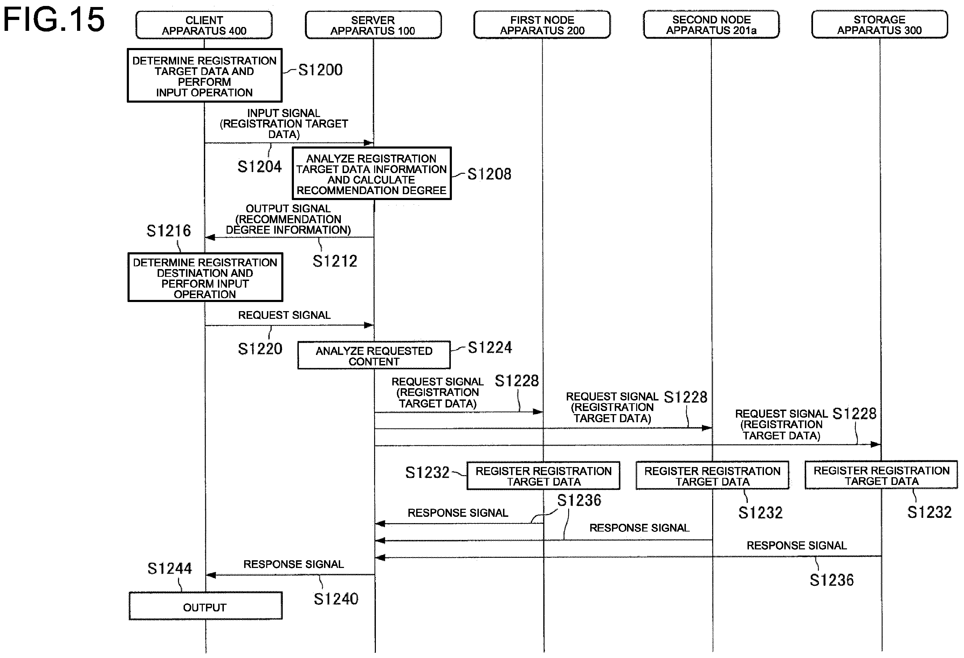

The functional configuration example of the server apparatus 100 according to the present embodiment has been described above. Subsequently, processing flow for providing the recommendation degree information to the user and processing flow for registering the registration target data will be described with reference to FIG. 15.

In step S1200, the user determines registration target data, and performs predetermined input operation on the input unit 420 of the client apparatus 400. In step S1204, the control unit 410 generates an input signal including the registration target data on the basis of the input operation and transmits the signal to the server apparatus 100 via the communication unit 450.

In step S1208, the recommendation degree calculating unit 114 of the server apparatus 100 analyzes the registration target data information and calculates the recommendation degree of each P2P database 221 on the basis of the registration target data information and the reliability information of each P2P database 221. In step S1212, an output signal including the recommendation degree information is transmitted to the client apparatus 400 by control by the output control unit 113.

In step S1216, the user determines the P2P database 221 which becomes a registration destination of the registration target data on the basis of the recommendation degree information and performs predetermined input operation on the input unit 420 of the client apparatus 400. In step S1220, the control unit 410 generates a request signal for requesting registration of the registration target data on the basis of the input operation and transmits the signal to the server apparatus 100 via the communication unit 450.

In step S1224, the access control unit 111 of the server apparatus 100 recognizes requested content by analyzing the request signal. In step S1228, the P2P database access control unit 111a or the storage access control unit 111b generates new request signals on the basis of the requested content, the P2P database access control unit 111a transmits the signal to the first node apparatus 200 or the second node apparatus 201a, and the storage access control unit 111b transmits the signal to the storage apparatus 300, respectively as needed.

In step S1232, the control unit 210 of the first node apparatus 200 or the second node apparatus 201a registers the registration target data in the P2P database 221, and the control unit 310 of the storage apparatus 300 registers the registration target data in the storage unit 320, respectively as necessary. In step S1236, the communication unit 230 of the first node apparatus 200 or the second node apparatus 201a or the communication unit 330 of the storage apparatus 300 transmits a response signal including information regarding a registration result to the server apparatus 100.

In step S1240, by control by the output control unit 113 of the server apparatus 100, the response signal including the information regarding the registration result is transmitted to the client apparatus 400. In step S1244, a series of processing is finished by the output unit 430 of the client apparatus 400 outputting the information regarding the registration result.

Note that respective steps in the sequence diagram in FIG. 15 do not necessarily have to be processed in chronological order in accordance with the described order. That is, the respective steps in the sequence diagram may be processed in order different from the described order or may be processed in parallel.

### (3.3. User interface example)

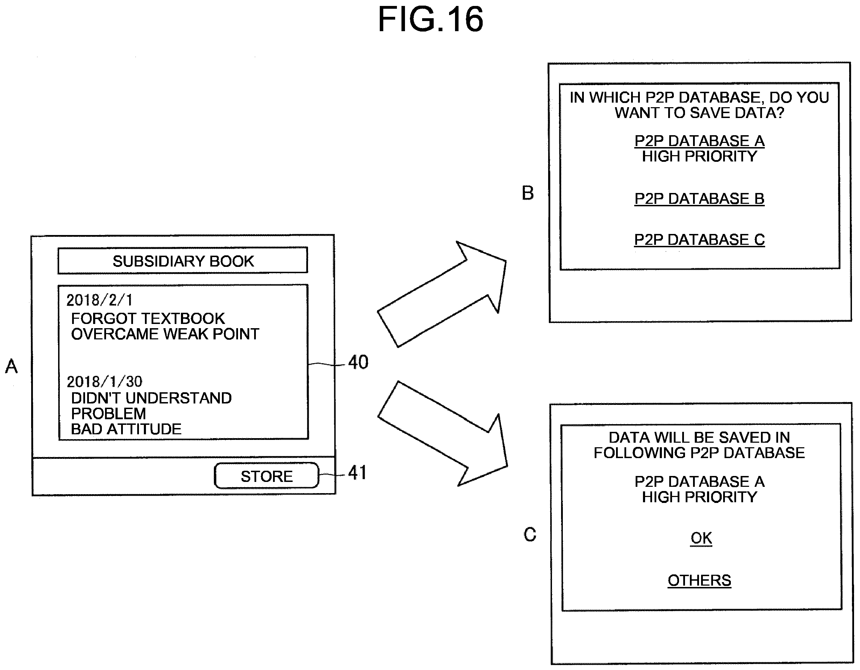

The processing flow for providing the recommendation degree information to the user and processing flow for registering the registration target data have been described above. Subsequently, an example of the UI when the recommendation degree information is provided to the user will be described with reference to FIG. 16 to FIG. 19.

For example, as illustrated in A in FIG. 16, it is assumed that the user inputs the registration target data in a data input field 40 using the input unit 420 of the client apparatus 400 and depresses a save button 41. Thereafter, the recommendation degree calculating unit 114 of the server apparatus 100 analyzes the registration target data information concerning the registration target data and calculates the recommendation degree of each P2P database 221. Then, for example, as illustrated in B in FIG. 16, the output control unit 113 may cause a list of a plurality of P2P databases 221 whose display order is determined on the basis of levels of the recommendation degrees to be displayed at the display along with a character string of "in which P2P database, do you want to save the data?" (in this example, the recommendation degree is higher in order of a P2P database A, a P2P database B and a P2P database C). In this event, the output control unit 113 may also cause the reliability information of the P2P databases 221 to be displayed at the display together (in this example, a character string of "high reliability" is displayed below the P2P database A). The user can select the P2P database 221 which becomes a registration destination using a predetermined method such as selection of a character string indicating the P2P database 221 (such as, for example, selection of a character string which is a hyperlink).

Further, as illustrated in C in FIG. 16, the output control unit 113 may cause only the P2P database 221 having the highest recommendation degree (in this example, the P2P database A) among the plurality of P2P databases 221 to be displayed at the display along with a character string of "the data will be saved in the following P2P database". The user can select the P2P database 221 recommended above using a predetermined method such as selection of a character string of "OK" (such as, for example, selection of a character string which is a hyperlink). Further, as illustrated in C in FIG. 16, by the output control unit 113 causing a character string of "others" to be displayed at the display, the user may be able to select other P2P databases 221 using a predetermined method such as selection of the character string.

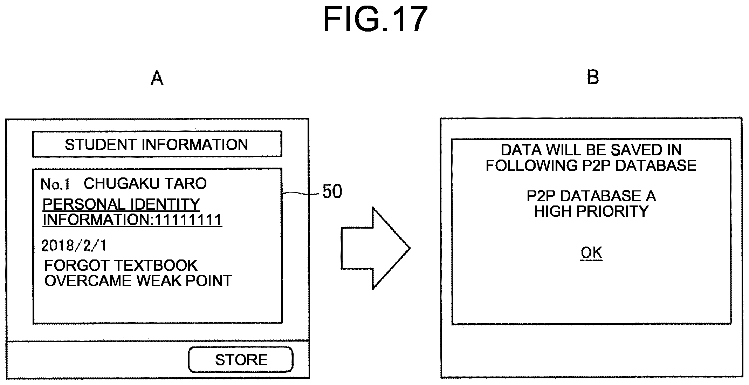

Further, as illustrated in A in FIG. 17, in a case where personal information such as personal identity information is included in the registration target data input to the data input field 50, as illustrated in B in FIG. 17, the output control unit 113 may cause only the P2P database 221 having the highest recommendation degree (in this example, the P2P database A having the highest reliability) to be displayed at the display (in other words, a character string of "others" does not have to be displayed). By this means, because options which can be selected by the user are limited, registration of personal information such as personal identity information in the P2P database 221 having a lower recommendation degree is prevented.

Further, as described above, the recommendation degree calculating unit 114 can calculate the recommendation degree of each P2P database 221 as needed on the basis of change of the registration target data information, and the output control unit 113 can provide the recommendation degree to the user as needed.

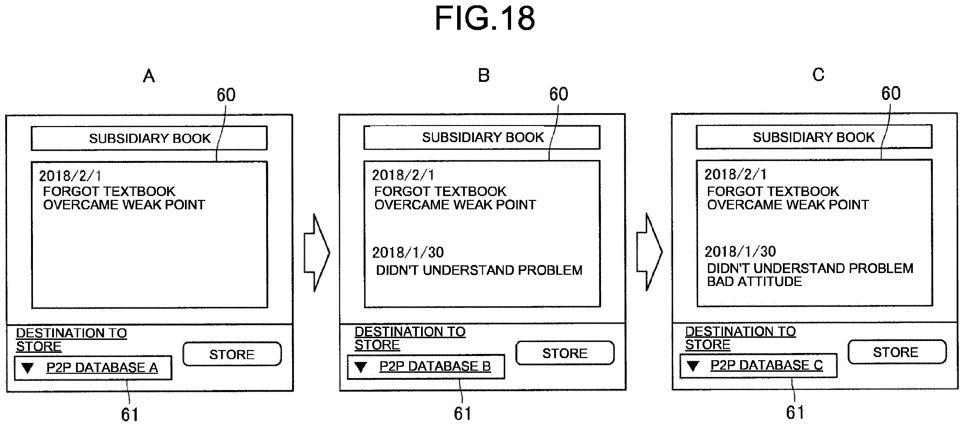

For example, as illustrated in A in FIG. 18, it is assumed that the user inputs the registration target data halfway in the data input field 60. The recommendation degree calculating unit 114 calculates the recommendation degree of each P2P database 221 by analyzing the registration target data information concerning the registration target data which is input halfway, and the output control unit 113 displays the P2P database 221 having the highest recommendation degree in a drop-down list 61. Then, every time the level of the recommendation degree of each P2P database 221 changes as data input progresses to B and C in FIG. 18, the output control unit 113 may change display of the drop-down list 61.

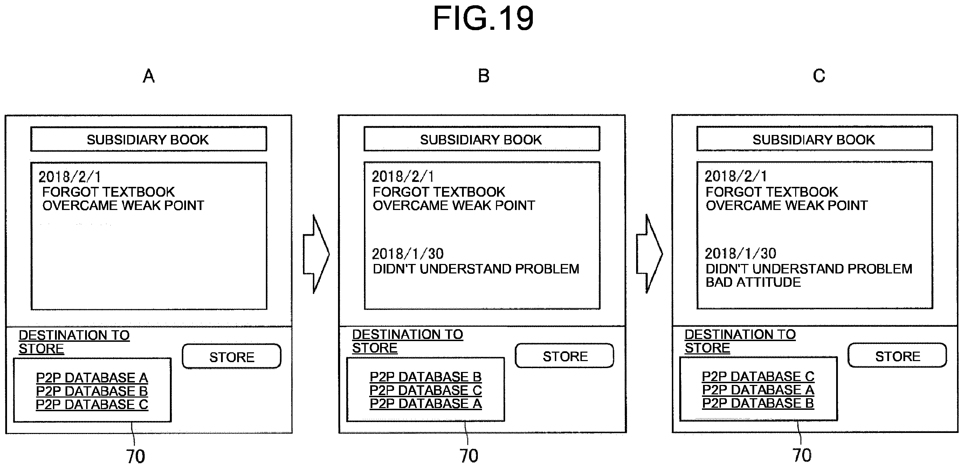

Here, while, in FIG. 18, only the P2P database 221 having the highest recommendation degree is displayed in the drop-down list 61, the display form is not limited to this. For example, as illustrated in A to C in FIG. 19, the output control unit 113 may cause a list of a plurality of P2P databases 221 for which display order is determined on the basis of the levels of the recommendation degrees to be displayed in the drop-down list 70. For example, the output control unit 113 may cause a list of a plurality of P2P databases 221 to be displayed in the drop-down list 70 so that the P2P database 221 having a higher recommendation degree is displayed in a higher stage.

Note that the UI when the recommendation degree information is provided to the user is not limited to the above. For example, the recommendation degree information may be provided by a sound output apparatus, or the like, such as a speaker. More specifically, the recommendation degree information may be provided to the user by name of the P2P database 221 having the highest recommendation degree being output with speech, or a light corresponding to the P2P database 221 having the highest recommendation degree being lighted. Further, in a case where cost required for data registration is determined on the basis of the reliability (or the recommendation degree) of the P2P database 221, information regarding cost as well as the recommendation degree information may be provided to the user.

### <4. Hardware configuration example>

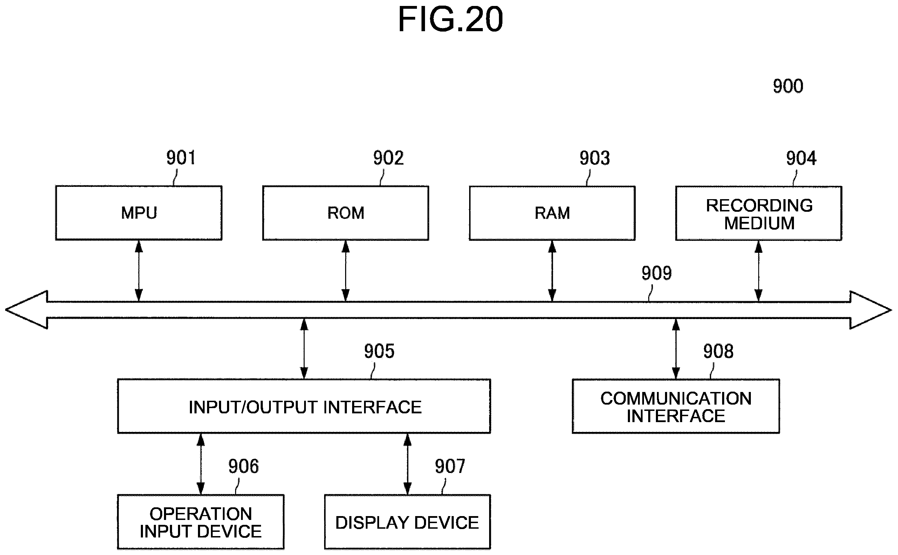

The second embodiment of the present disclosure has been described above. Subsequently, hardware configurations of the respective apparatuses will be described with reference to FIG. 20.

FIG. 20 is a block diagram illustrating an example of a hardware configuration of the server apparatus 100, the first node apparatus 200, the second node apparatus 201, the storage apparatus 300 or the client apparatus 400 according to the first embodiment or the second embodiment. These apparatuses can be embodied by an information processing apparatus 900 illustrated in FIG. 20.

The information processing apparatus 900 includes, for example, an MPU 901, a ROM 902, a RAM 903, a recording medium 904, an input/output interface 905, an operation input device 906, a display device 907 and a communication interface 908. Further, in the information processing apparatus 900, for example, respective components are connected with a bus 909 as a data transmission path.

The MPU 901 is, for example, constituted with one or two or more processors, various kinds of processing circuits, or the like, which are constituted with arithmetic circuits such as MPUs, and functions as the control unit 110 of the server apparatus 100, the control unit 210 of the first node apparatus 200 or the second node apparatus 201, the control unit 310 of the storage apparatus 300 or the control unit 410 of the client apparatus 400. Note that these functional components may be constituted with dedicated (or general-purpose) circuits (such as, for example, processors different from the MPU 901) which can realize various kinds of processing described above.

The ROM 902 stores control data, or the like, such as programs, operation parameters, or the like, to be used by the MPU 901. The RAM 903, for example, temporarily stores programs, or the like, to be executed by the MPU 901.

The recording medium 904 functions as the storage unit 120 of the server apparatus 100, the storage unit 220 of the first node apparatus 200 or the second node apparatus 201, the storage unit 320 of the storage apparatus 300 or the storage unit 440 of the client apparatus 400, and stores various kinds of data such as data regarding information processing according to each embodiment and various kinds of programs. Here, examples of the recording medium 904 can include, for example, a magnetic recording medium such as a hard disk, and a nonvolatile memory such as a flash memory. Further, the recording medium 904 may be detachable from the information processing apparatus 900.

The input/output interface 905 connects, for example, an operation input device 906 and a display device 907. Here, examples of the input/output interface 905 can include, for example, a universal serial bus (USB) terminal, a digital visual interface (DVI) terminal, a high-definition multimedia interface (HDMI) (registered trademark) terminal, various kinds of processing circuits, or the like.

Further, the operation input device 906 is, for example, provided on the information processing apparatus 900, and is connected to the input/output interface 905 inside the information processing apparatus 900. Examples of the operation input device 906 can include, for example, a keyboard, a mouse, a keypad, a touch panel, a microphone, an operation button, a cursor key, a rotary selector such as a jog dial, combination of these, or the like. The operation input device 906 functions as the input unit 420 of the client apparatus 400.

Further, the display device 907 is, for example, provided on the information processing apparatus 900, and is connected to the input/output interface 905 inside the information processing apparatus 900. Examples of the display device 907 can include, for example, a liquid crystal display, an organic electro-luminescence (EL) display, or the like. The display device 907 functions as the output unit 430 of the client apparatus 400.

Note that it goes without saying that the input/output interface 905 can be connected to an external device such as an operation input device and an external display device outside the information processing apparatus 900. Further, the display device 907 may be a device such as, for example, a touch panel, which can perform display and allows user operation.

The communication interface 908 is communication means provided at the information processing apparatus 900 and functions as the communication unit 130 of the server apparatus 100, the communication unit 230 of the first node apparatus 200 or the second node apparatus 201, the communication unit 330 of the storage apparatus 300 or the communication unit 450 of the client apparatus 400. Further, the communication interface 908 may have a function of performing communication in a wireless or wired manner, for example, with an arbitrary external apparatus such as a server via an arbitrary network (or directly). Here, examples of the communication interface 908 can include, for example, a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration illustrated in FIG. 20. For example, in a case where the information processing apparatus 900 performs communication via a connected external communication device, the information processing apparatus 900 does not include the communication interface 908. Further, the communication interface 908 may have a configuration which enables communication using a plurality of communication schemes. Further, the information processing apparatus 900, for example, does not have to include the operation input device 906, the display device 907, or the like. Further, for example, part or all of the components illustrated in FIG. 20 may be realized with one or two or more integrated circuits (ICs).

### <5. Conclusion>

As described in the first embodiment, according to the present disclosure, it is possible to calculate the reliability of the P2P database 221 on the basis of the P2P database information. For example, according to the present disclosure, it is possible to calculate the reliability of the P2P database 221 on the basis of information indicating a type or an operator of the P2P database infrastructure (or the P2P network), the number of nodes (or the number of members, or the like) connected to the P2P network, a data amount (or the number of blocks in blockchain data, or the like) of the P2P database 221, an operation period (or date and time at which the P2P database 221 is created), updating frequency or a period elapsed since the last update time (or date and time at which the P2P database 221 has been updated last time), software (such as, for example, middleware) to be used for processing regarding the P2P database 221, or the like, as the P2P database information. By this means, because the user can recognize reliability of each of a plurality of P2P databases 221, the user can appropriately deal with registered data of each P2P database 221.

Further, as described in the second embodiment, according to the present disclosure, it is possible to calculate the recommendation degree of the P2P database 221 which becomes a registration destination on the basis of the registration target data information and the reliability information of each P2P database 221. By this means, because the user can recognize the recommendation degree of each of a plurality of P2P databases 221, the user can cause the registration target data to be registered in a more appropriate P2P database 221.

As described above, the favorable embodiments of the present disclosure have been described in detail with reference to the accompanying drawings, but the technical scope of the present disclosure is not limited to such examples. It is obvious that persons having ordinary knowledge in the technical field of the present disclosure can conceive various changes and alterations within the scope of the technical idea described in the claims, and it is naturally understood that these changes and alterations belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects.

Note that the following configuration also belong to the technical scope of the present disclosure.
(1) An information processing apparatus, comprising:
   a reliability calculating unit configured to calculate reliability of a P2P database on a basis of information regarding the P2P database.
(2) The information processing apparatus according to (1),
   wherein the reliability calculating unit calculates the reliability for each of a plurality of the P2P databases.
(3) The information processing apparatus according to (2),
   wherein the reliability calculating unit calculates the reliability on a basis of at least one of information indicating a type or an operator of a P2P database infrastructure, a number of nodes connected to a P2P network, a data amount of the P2P database, an operation period, updating frequency or a period elapsed since last update time, or software to be used for processing regarding the P2P database, or externally provided information, as the information regarding the P2P database.
(4) The information processing apparatus according to (3),
   wherein the externally provided information includes at least one of information regarding word-of-mouth as to the P2P database, evaluation, content of news, or an exchange situation of currency managed by the P2P database.
(5) The information processing apparatus according to any one of (1) to (4), further comprising:
   an output control unit configured to control output of information regarding the reliability to a user or an external apparatus.
(6) The information processing apparatus according to (5),
   wherein the output control unit controls the output in association with provision of registered data registered in the P2P database to the user or the external apparatus.
(7) The information processing apparatus according to (5),
   wherein the output control unit controls the output in association with registration of registration target data in the P2P database by the user or the external apparatus.
(8) The information processing apparatus according to (7), further comprising:
   a recommendation degree calculating unit configured to, in association with the registration, calculate a recommendation degree of the P2P database which becomes a registration destination on a basis of information regarding the registration target data and the information regarding the reliability,
   wherein the output control unit also controls output of information regarding the recommendation degree to the user or the external apparatus.
(9) The information processing apparatus according to (8),
   wherein the recommendation degree calculating unit calculates the recommendation degree on a basis of information indicating a type, a degree of importance, content, application, a creator, a person who has performed updating, or a past registration status of the registration target data as the information regarding the registration target data.
(10) The information processing apparatus according to (8) or (9),
   wherein the recommendation degree calculating unit calculates the recommendation degree as needed on a basis of change of the information regarding the registration target data or change of the information regarding the reliability.
(11) The information processing apparatus according to any one of (1) to (10),
   wherein the P2P database is blockchain data.
(12) An information processing method to be executed by a computer, the information processing method comprising:
   calculating reliability of a P2P database on a basis of information regarding the P2P database.
(13) A program for causing a computer to execute:
   calculating reliability of a P2P database on a basis of information regarding the P2P database.

### Reference Signs List

- 100: SERVER APPARATUS

- 110: CONTROL UNIT
- 111: ACCESS CONTROL UNIT
- 111a: P2P DATABASE ACCESS CONTROL UNIT
- 111b: STORAGE ACCESS CONTROL UNIT
- 111c: EXTERNAL ACCESS CONTROL UNIT
- 112: RELIABILITY CALCULATING UNIT
- 113: OUTPUT CONTROL UNIT
- 114: RECOMMENDATION DEGREE CALCULATING UNIT
- 120: STORAGE UNIT
- 130: COMMUNICATION UNIT
- 200: FIRST NODE APPARATUS
- 201: SECOND NODE APPARATUS
- 210: CONTROL UNIT
- 220: STORAGE UNIT
- 221: P2P DATABASE
- 222: P2P DATABASE PROGRAM
- 230: COMMUNICATION UNIT
- 300: STORAGE APPARATUS
- 310: CONTROL UNIT
- 320: STORAGE UNIT
- 330: COMMUNICATION UNIT
- 400: CLIENT APPARATUS
- 410: CONTROL UNIT
- 420: INPUT UNIT
- 430: OUTPUT UNIT
- 440: STORAGE UNIT
- 450: COMMUNICATION UNIT
- 500: FIRST P2P NETWORK
- 501: SECOND P2P NETWORK
- 600: NETWORK

## Claims

1. An information processing apparatus, comprising:
a reliability calculating unit configured to calculate reliability of a P2P database on a basis of information regarding the P2P database.

2. The information processing apparatus according to claim 1,
wherein the reliability calculating unit calculates the reliability for each of a plurality of the P2P databases.

3. The information processing apparatus according to claim 2,
wherein the reliability calculating unit calculates the reliability on a basis of at least one of information indicating a type or an operator of a P2P database infrastructure, a number of nodes connected to a P2P network, a data amount of the P2P database, an operation period, updating frequency or a period elapsed since last update time, or software to be used for processing regarding the P2P database, or externally provided information, as the information regarding the P2P database.

4. The information processing apparatus according to claim 3,
wherein the externally provided information includes at least one of information regarding word-of-mouth as to the P2P database, evaluation, content of news, or an exchange situation of currency managed by the P2P database.

5. The information processing apparatus according to claim 1, further comprising:
an output control unit configured to control output of information regarding the reliability to a user or an external apparatus.

6. The information processing apparatus according to claim 5,
wherein the output control unit controls the output in association with provision of registered data registered in the P2P database to the user or the external apparatus.

7. The information processing apparatus according to claim 5,
wherein the output control unit controls the output in association with registration of registration target data in the P2P database by the user or the external apparatus.

8. The information processing apparatus according to claim 7, further comprising:
a recommendation degree calculating unit configured to, in association with the registration, calculate a recommendation degree of the P2P database which becomes a registration destination on a basis of information regarding the registration target data and the information regarding the reliability,
wherein the output control unit also controls output of information regarding the recommendation degree to the user or the external apparatus.

9. The information processing apparatus according to claim 8,
wherein the recommendation degree calculating unit calculates the recommendation degree on a basis of information indicating a type, a degree of importance, content, application, a creator, a person who has performed updating, or a past registration status of the registration target data as the information regarding the registration target data.

10. The information processing apparatus according to claim 8,
wherein the recommendation degree calculating unit calculates the recommendation degree as needed on a basis of change of the information regarding the registration target data or change of the information regarding the reliability.

11. The information processing apparatus according to claim 1,
wherein the P2P database is blockchain data.

12. An information processing method to be executed by a computer, the information processing method comprising:
calculating reliability of a P2P database on a basis of information regarding the P2P database.

13. A program for causing a computer to execute:
calculating reliability of a P2P database on a basis of information regarding the P2P database.
